# EUROPEAN PATENT APPLICATION

(11) **EP 4 568 217 A1**
(43) Date of publication of application: **11.06.2025**
(21) Application number: 23851261.0
(22) Date of filing: 25.04.2023
(51) Int. Cl.: H04L 41/14, G06F 30/27, G06N 3/098

(54) **DATA ANALYSIS METHOD AND APPARATUS**

(30) Priority: 09.08.2022 CN 202210951168
(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: Maiwald GmbH
(86) International application number: PCT/CN2023/090526
(87) International publication number: WO 2024/032031

(57) **Abstract**

A data analytics method and an apparatus are provided. The method includes: A server MTLF sends a first model to each of N candidate client MTLFs. The server MTLF receives first accuracy evaluation information from each of the N candidate client MTLFs. The first accuracy evaluation information indicates accuracy that is of the first model and that is determined by the candidate client MTLF by using local data, and N is a positive integer greater than 1. The server MTLF determines, based on the N pieces of first accuracy evaluation information, client MTLFs that participate in federated learning in the N candidate client MTLFs. For example, the server MTLF may select client MTLFs whose first accuracy evaluation information is similar or tends to be consistent to participate in the federated learning, to ensure prediction accuracy of a model obtained through the federated learning.

## Description

### CROSS-REFERENCE TO RELATED APPLICATIONS

This application claims priority to Chinese Patent Application No. 202210951168.5, filed with the China National Intellectual Property Administration on August 9, 2022 and entitled "DATA ANALYTICS METHOD AND APPARATUS", which is incorporated herein by reference in its entirety.

### TECHNICAL FIELD

Embodiments of this application relate to the field of communication technologies, and in particular, to a data analytics method and an apparatus.

### BACKGROUND

Federated learning (federated learning, FL) is distributed machine learning, and implements data sharing and joint modeling on the basis of ensuring data privacy and security. A core idea of the federated learning is that distributed model training is performed between a plurality of data sources having a local database, and model joint training is implemented by exchanging only intermediate parameters of models without exchanging data samples. In the federated learning, selecting clients that participate in the federated learning is a current concern.

### SUMMARY

This application provides a data analytics method and an apparatus, to determine clients that participate in federated learning in a federated learning process.

According to a first aspect, a data analytics method is provided. The method is performed by a server MTLF, or an apparatus (a circuit, a chip, or the like) configured in the server MTLF. For example, the method is performed by the server MTLF, and the method includes: The server MTLF sends a first model to each of N candidate client MTLFs. Optionally, the first model is an initial model, an intermediate model, or a final model in a federated learning process. The server MTLF receives first accuracy evaluation information from each of the N candidate client MTLFs. The first accuracy evaluation information indicates accuracy that is of the first model and that is determined by the candidate client MTLF by using local data, and N is a positive integer greater than 1. Optionally, the local data (local data) of the candidate client MTLF is data collected by the candidate client MTLF in a service area of the candidate client MTLF. In the federated learning process, local data collected by a client MTLF in a service area of the client MTLF is not sent to another client MTLF. The local data may also be referred to as a local data set (local data set). The server MTLF determines, based on the N pieces of first accuracy evaluation information, client MTLFs that participate in federated learning in the N candidate client MTLFs.

Through the foregoing design, the server MTLF may select client MTLFs whose feedback evaluation information of models is similar to participate in the federated learning. For the client MTLFs whose accuracy evaluation information of the model is similar, distribution of local data of the client MTLFs is also similar. Selecting the client MTLFs whose distribution of the local data is similar to perform the federated learning can improve prediction accuracy of a model trained through the federated learning.

In a design, the server MTLF sends a first model evaluation request message to each of the N candidate client MTLFs. The first model evaluation request message includes the first model. The server MTLF receives a first model evaluation request response message from each of the N candidate client MTLFs. The first model evaluation request response message includes the first accuracy evaluation information.

In a design, the N pieces of first accuracy evaluation information are N evaluated values that are of the accuracy of the first model and that are fed back by the N candidate client MTLFs, and a difference between evaluated values fed back by any two of the client MTLFs that participate in the federated learning is less than or equal to a first threshold. For example, in an implementation, a largest evaluated value and a smallest evaluated value are determined in the N evaluated values. All the N candidate clients participate in the federated learning if a difference between the largest evaluated value and the smallest evaluated value is less than or equal to the first threshold, . Alternatively, a mean of the N evaluated values is determined if a difference between the largest evaluated value and the smallest evaluated value is greater than the first threshold. An absolute value of a difference between each of the N evaluated values and the mean is determined. The absolute value of the difference between the evaluated value and the mean is referred to as a distance from a candidate client corresponding to the evaluated value to a center of mass. A candidate client MTLF whose distance to the center of mass is largest is removed from a federated learning group including the N candidate client MTLFs, to form a new federated learning group. Determining of a largest evaluated value and a smallest evaluated value in the new federated learning group and determining of a value relationship between a difference between the two evaluated values and the first threshold are continued. Alternatively, the first accuracy evaluation information is an evaluation level that is of the accuracy of the first model and that is fed back by the candidate client MTLF, and evaluation levels fed back by the client MTLFs that participate in the federated learning meet a target evaluation level. For example, in an implementation, an evaluation level whose difference from the target evaluation level is less than or equal to a third threshold is determined in N evaluation levels. A candidate client MTLF corresponding to the evaluation level whose difference from the target evaluation level is less than or equal to the third threshold is used as a client MTLF that participates in the federated learning.

Through the foregoing method, accuracy evaluation information fed back by the client MTLFs that participate in the federated learning and that are selected from the N candidate client MTLFs may be close. For example, a difference between evaluated values that are of the accuracy of the first model and that are fed back by any two client MTLFs is less than or equal to the first threshold. This ensures that distribution of local data of the client MTLFs that participate in the federated learning tends to be consistent, and prediction accuracy of a model of the federated learning is improved.

In a design, the method further includes: The server MTLF sends the first model to an analytics logical function AnLF. The server MTL receives second accuracy evaluation information from the AnLF. The second accuracy evaluation information indicates accuracy that is of the first model and that is determined by the AnLF by using local data. Optionally, the local data of the AnLF is data collected by the AnLF in a service area of the AnLF. For example, in an implementation, the server MTLF sends a second model evaluation request message to the AnLF. The second model evaluation request message includes the first model. The server MTLF receives a second model evaluation request response message from the AnLF. The second model evaluation request response message includes the second accuracy evaluation information.

In a design, the determining, based on the N pieces of first accuracy evaluation information, client MTLFs that participate in federated learning in the N candidate client MTLFs includes: determining, based on the N pieces of first accuracy evaluation information and the second accuracy evaluation information, the client MTLFs that are in the N candidate client MTLFs and that participate in the federated learning.

In a design, the second accuracy evaluation information is a reference value that is of the accuracy of the first model and that is fed back by the AnLF, the first accuracy evaluation information is an evaluated value that is of the accuracy of the first model and that is fed back by the candidate client MTLF, and a difference between an evaluated value fed back by any one of the client MTLFs that participate in the federated learning and the reference value is less than or equal to a fourth threshold. The determining, based on the N pieces of first accuracy evaluation information and the second accuracy evaluation information, the client MTLFs that are in the N candidate client MTLFs and that participate in the federated learning includes: determining, in N evaluated values, an evaluated value whose difference from the reference value is less than or equal to the fourth threshold; and using a candidate client MTLF corresponding to the evaluated value whose difference from the reference value is less than or equal to the fourth threshold as a client MTLF that participates in the federated learning. Alternatively, the second accuracy evaluation information is a reference level that is of the accuracy of the first model and that is fed back by the AnLF, the first accuracy evaluation information is an evaluation level that is of the accuracy of the first model and that is fed back by the candidate client MTLF, and a difference between an evaluation level fed back by the client MTLF that participates in the federated learning and the reference level is less than or equal to a fifth threshold. The determining, based on the N pieces of first accuracy evaluation information and the second accuracy evaluation information, the client MTLFs that are in the N candidate client MTLFs and that participate in the federated learning includes: determining, in N evaluation levels, an evaluation level whose difference from the reference level is less than or equal to the fifth threshold; and using a candidate client MTLF corresponding to the evaluation level whose difference from the reference level is less than or equal to the fifth threshold as a client MTLF that participates in the federated learning.

Through the foregoing design, if a feature of local data of a client MTLF tends to be consistent with or is similar to a feature of the local data of the AnLF, a difference between first accuracy evaluation information that is of the first model and that is determined by the client MTLF and the second accuracy evaluation information that is of the first model and that is determined by the AnLF should be small. If the difference between the first accuracy evaluation information and the second accuracy evaluation information is too large, the feature of the local data of the client MTLF is quite different from the feature of the local data of the AnLF. Through the foregoing design, the candidate client MTLF whose feature of the local data is quite different from the feature of the local data of the AnLF is removed from the N candidate client MTLFs, to ensure that a feature of local data of the client MTLF that participates in the federated learning is similar to the feature of the local data of the AnLF and improve inference accuracy of a model of the federated learning.

In a design, the evaluated value or the reference value includes at least one of the following: a correct rate, an error rate, a precision rate, a recall rate, a mean absolute error, a mean absolute percentage error, or a mean square error.

In a design, the method further includes: receiving a model request message from the AnLF, where the model request message includes at least target accuracy that needs to be met by a model; and terminating the federated learning when third accuracy evaluation information that is of the first model and that is fed back by the client MTLF that participates in the federated learning meets a requirement of the target accuracy; or when third accuracy evaluation information that is of the first model and that is fed back by the client MTLF that participates in the federated learning does not meet a requirement of the target accuracy, determining a second model based on a model parameter fed back by the client MTLF that participates in the federated learning.

Through the foregoing design, the AnLF may notify, by using the model request message, the server MTLF of target accuracy that needs to be achieved by a trained model. When a model obtained through federated learning training meets the target accuracy, the server MTLF terminates the federated learning, so that the model obtained through the federated learning training meets a preset requirement of the target accuracy.

According to a second aspect, a data analytics method is provided. The method is performed by a client MTLF or an AnLF, an apparatus configured in the client MTLF, an apparatus configured in the AnLF, or the like, and the method includes: receiving a model evaluation request message from a server model training logical function MTLF, where the model evaluation request message includes a first model. Optionally, the first model is an initial model, an intermediate model, or a final model in a federated learning process. Accuracy evaluation information of the first model is determined by using local data. A model evaluation request response message is sent to the server MTLF. The model request response message includes the accuracy evaluation information of the first model.

In a design, the accuracy evaluation information may be first accuracy evaluation information, and the first accuracy evaluation information indicates accuracy that is of the first model and that is determined by a candidate client MTLF by using local data. Alternatively, the accuracy evaluation information is second accuracy evaluation information, and the second accuracy evaluation information indicates accuracy that is of the first model and that is determined by an analytics logical function AnLF by using local data.

In a design, the accuracy evaluation information of the first model is an evaluated value of the accuracy of the first model. The determining accuracy evaluation information of the first model by using local data includes: determining an output of the first model based on the local data and the first model; and determining the evaluated value of the accuracy of the first model based on the output of the first model.

In a design, the accuracy evaluation information of the first model is an evaluation level of the accuracy of the first model. The determining accuracy evaluation information of the first model by using local data includes: determining an output of the first model based on the local data and the first model; determining an evaluated value of the accuracy of the first model based on the output of the first model; and determining the evaluation level of the accuracy of the first model based on the evaluated value of the accuracy of the first model.

In a design, when the method according to the second aspect is performed by the AnLF or the apparatus configured in the AnLF, the method further includes: sending a model request message to the server MTLF, where the model request message includes at least target accuracy that needs to be met by a model.

In a design, when the method according to the second aspect is performed by the AnLF or the apparatus configured in the AnLF, before the sending a model request message to the server MTLF, the method further includes: receiving an analytics request message from a user, where the analytics request message includes at least one of the following: an analytics identifier, analytics filter information, or a target accuracy that needs to be met by the analytics; and determining that a local model of the analytics logical function AnLF cannot meet a requirement of the analytics request message, and that an MTLF that meets the requirement of the analytics request message cannot be found in a network repository function NRF.

Through the foregoing design, if a model that meets the analytics identifier and the model filter information and that meets the target accuracy can be found through matching, the AnLF determines not to perform the federated learning; or if a model that meets the analytics identifier and the model filter information and that meets the target accuracy cannot be found through matching, the AnLF determines to perform the federated learning, to train a model that meets the target accuracy and that is used for inference of a current task in the federated learning process.

In a design, the evaluated value includes at least one of the following: a correct rate, an error rate, a precision rate, a recall rate, a mean absolute error, a mean absolute percentage error, or a mean square error.

According to a third aspect, a data analytics method is provided. The method is performed by a server MTLF or an apparatus configured in the server MTLF, and the method includes: receiving a model request message from an analytics logical function AnLF, where the model request message includes at least one of the following: an analytics identifier, model filter information, or target accuracy that needs to be met by a model, the analytics identifier identifies an analytics task, the model filter information indicates a condition that needs to be met by training data in a federated learning process, and the target accuracy that needs to be met by the model indicates accuracy that needs to be met by a model that infers a current analytics task; and determining, based on the model request message, to perform federated learning or not to perform the federated learning.

Through the foregoing design, the server MTLF may determine, based on the model request message, whether to perform subsequent federated learning. This can avoid unnecessary federated learning, save network resources, and meet an accuracy requirement of a model for an analytics service.

In a design, the determining, based on the model request message, to perform federated learning or not to perform the federated learning includes: determining a feature of the training data in the federated learning process based on the analytics identifier and/or the model filter information; and determining to perform the federated learning if the feature of the training data is unrelated to a geographic location; or determining not to perform the federated learning if the feature of the training data is related to a geographic location.

In a design, the determining, based on the model request message, to perform federated learning or not to perform the federated learning includes: sending a first model evaluation request message to a client MTLF that participates in the federated learning, where the first model evaluation request message is used to request the client MTLF to report accuracy evaluation information of a local model; receiving a first model evaluation request response message from the client MTLF, where the first model evaluation request response message includes the accuracy evaluation message that is of the local model and that is reported by the client MTLF; and determining not to perform the federated learning if the accuracy evaluation information that is of the local model and that is fed back by the client MTLF meets the target accuracy; or determining to perform the federated learning if the accuracy evaluation information that is of the local model and that is fed back by the client MTLF does not meet the target accuracy.

Through the foregoing design, the server MTLF may determine, based on the local model or a model obtained in each round of federated learning, whether to perform subsequent federated learning. This can avoid unnecessary federated learning and save network resources.

In a design, when the determining not to perform the federated learning, the method further includes: sending a model request response message to the AnLF, where the model request response message includes a federated learning failure cause or an analytics aggregation indication, and the analytics aggregation indication indicates the AnLF to determine a result of the current analytics task in an analytics aggregation manner.

In a design, when the determining to perform federated learning, the method further includes: sending a second model evaluation request message to the client MTLF that participates in the federated learning, where the second model evaluation request message includes a model obtained in this round of model training, and the second model evaluation request message is used to request the client MTLF to report accuracy evaluation information of the model obtained in this round of training; receiving a second model evaluation request response message from the client MTLF, where the second model evaluation request response message includes the accuracy evaluation information that is of the model obtained in this round of model training and that is reported by the client MTLF; and terminating the federated learning if the accuracy evaluation information that is of the model obtained in this round of model training and that is reported by the client MTLF meets the target accuracy.

According to a fourth aspect, a data analytics method is provided. The method is performed by an AnLF or an apparatus configured in the AnLF, and the method includes: receiving an analytics request message from a user, where the analytics request message includes an analytics identifier and preferred accuracy of the analytics; and sending a model request message to a server MTLF when a local model of an analytics logical function AnLF cannot meet a requirement of the analytics request message and a model training logical function MTLF that meets the requirement of the analytics request message cannot be found in a network repository function NRF, where the model request message includes at least one of the following: an analytics identifier, model filter information, or target accuracy that needs to be met by a model, the target accuracy that needs to be met by the model is determined based on the preferred analytics accuracy of the analytics, and the model filter information indicates a condition that needs to be met by training data in a model training process.

In a design, the method further includes: receiving a model request response message from the server MTLF, where the model request response message includes a federated learning failure cause or an analytics aggregation indication, and the analytics aggregation indication indicates the AnLF to determine a result of a current analytics task in an analytics aggregation manner.

According to a fifth aspect, a communication apparatus is provided. The apparatus may be a server MTLF, an apparatus (for example, a chip) configured in the server MTLF, or an apparatus that can be used together with the server MTLF. The apparatus has a function of implementing the method according to the first aspect or the third aspect. The function may be implemented by hardware, or may be implemented by hardware executing corresponding software. The hardware or the software includes one or more units corresponding to the foregoing function, for example, a transceiver unit and a processing unit.

According to a sixth aspect, a communication apparatus is provided. The communication apparatus includes a unit or means (means) configured to perform the steps in the first aspect or the third aspect.

According to a seventh aspect, a communication apparatus is provided, including a processor and a memory. The memory is configured to store computer instructions. When the apparatus runs, the processor executes the computer instructions stored in the memory, so that the apparatus performs the method according to the first aspect or the third aspect.

According to an eighth aspect, a communication apparatus is provided, including a processor coupled to a memory. The processor is configured to invoke a program stored in the memory, to perform the method according to the first aspect or the third aspect. The memory may be located in the apparatus, or may be located outside the apparatus. In addition, there may be one or more processors.

According to a ninth aspect, a communication apparatus is provided, including a processor and an interface circuit. The processor is configured to communicate with another apparatus through the interface circuit, and perform the method according to the first aspect or the third aspect. There may be one or more processors.

According to a tenth aspect, a communication apparatus is provided. The apparatus may be a client MTLF, an apparatus (for example, a chip) configured in the client MTLF, or an apparatus that can be used together with the client MTLF. Alternatively, the apparatus may be an AnLF, an apparatus (for example, a chip) configured in the AnLF, or an apparatus that can be used together with the AnLF. The apparatus has a function of implementing the second aspect or the fourth aspect. The function may be implemented by hardware, or may be implemented by hardware executing corresponding software. The hardware or the software includes one or more units corresponding to the foregoing function, for example, a transceiver unit and a processing unit.

According to an eleventh aspect, a communication apparatus is provided, including a unit or means (means) configured to perform the steps in the second aspect or the fourth aspect.

According to a twelfth aspect, a communication apparatus is provided, including a processor and a memory. The memory is configured to store computer instructions. When the apparatus runs, the processor executes the computer instructions stored in the memory, so that the apparatus performs the method according to the second aspect or the fourth aspect.

According to a thirteenth aspect, a communication apparatus is provided, including a processor coupled to a memory. The processor is configured to invoke a program stored in the memory, to perform the method according to the second aspect or the fourth aspect. The memory may be located in the apparatus, or may be located outside the apparatus. In addition, there may be one or more processors.

According to a fourteenth aspect, a communication apparatus is provided, including a processor and an interface circuit. The processor is configured to communicate with another apparatus through the interface circuit, and perform the method according to the second aspect or the fourth aspect. There may be one or more processors.

According to a fifteenth aspect, a chip system is provided, including: a processor, configured to perform the method according to any one of the first aspect to the fourth aspect.

According to a sixteenth aspect, a computer-readable storage medium is provided. The computer-readable storage medium stores instructions. When the instructions are run on a communication apparatus, the method according to any one of the first aspect to the fourth aspect is performed.

According to a seventeenth aspect, a computer program product is provided. The computer program product includes a computer program or instructions. When the computer program or the instructions are run by a communication apparatus, the method according to any one of the first aspect to the fourth aspect is performed.

According to an eighteenth aspect, a communication system is provided. The system includes the apparatus according to any one of the fifth aspect to the ninth aspect and the apparatus according to any one of the tenth aspect to the fourteenth aspect.

According to a nineteenth aspect, a data analytics method is provided. The method includes: A server MTLF sends a first model to each of N candidate client MTLFs. Any one of the N candidate client MTLFs determines first accuracy evaluation information of the first model by using local data. The first accuracy evaluation information indicates accuracy that is of the first model and that is determined by the candidate client MTLF by using the local data, and N is a positive integer greater than 1. The candidate client MTLF sends the first accuracy evaluation information to the server MTLF. The server MTLF determines, based on the N pieces of first accuracy evaluation information, client MTLFs that participate in federated learning in the N candidate client MTLFs.

In a design, the server MTLF may send a first model evaluation request message to each of the N candidate client MTLFs. The first model evaluation request message includes the first model. The server MTLF receives a first model evaluation request response message from each of the N candidate client MTLFs. The first model evaluation request response message includes the first accuracy evaluation information.

In a design, the first accuracy evaluation information is an evaluated value that is of the accuracy of the first model and that is fed back by the candidate client MTLF. For example, the candidate client MTLF determines an output of the first model based on the local data and the first model. The candidate client determines the evaluated value of the accuracy of the first model based on the output of the first model. A difference between evaluated values fed backed by any two candidate client MTLFs in the client MTLFs that participate in the federated learning and that are determined by the server MTLF is less than or equal to a first threshold. For example, the server MTLF determines a largest evaluated value and a smallest evaluated value in N evaluated values. All the N candidate clients participate in the federated learning if a difference between the largest evaluated value and the smallest evaluated value is less than or equal to the first threshold, . Alternatively, the server MTLF determines a mean of the N evaluated values if a difference between the largest evaluated value and the smallest evaluated value is greater than the first threshold; determines an absolute value of a difference between each of the N evaluated values and the mean; removes, from a federated learning group including the N candidate clients, a candidate client MTLF corresponding to an evaluated value whose absolute value of a difference from the mean is largest, to form a new federated learning group; and continues to determine a largest evaluated value and a smallest evaluated value in the new federated learning group, and determine a value relationship between a difference between the two evaluated values and the first threshold.

In a design, the first accuracy evaluation information is an evaluation level that is of the accuracy of the first model and that is fed back by the candidate client MTLF. For example, the client MTLF determines an output of the first model based on the local data and the first model. The client MTLF determines an evaluated value of the accuracy of the first model based on the output of the first model. The client MTLF determines the evaluation level of the accuracy of the first model based on the evaluated value of the accuracy of the first model. Evaluation levels fed back by the client MTLFs that participate in the federated learning and that are determined by the server MTLF meet a target evaluation level. For example, the server MTLF determines, in N evaluation levels, an evaluation level whose difference from the target evaluation level is less than or equal to a third threshold. The server MTLF uses a candidate client MTLF corresponding to the evaluation level whose difference from the target evaluation level is less than or equal to the third threshold as a client MTLF that participates in the federated learning.

In a design, the method further includes: The server MTLF sends the first model to an analytics logical function AnLF. The AnLF determines second accuracy evaluation information of the first model by using local data. The second accuracy evaluation information indicates accuracy that is of the first model and that is determined by the AnLF by using the local data. The AnLF sends the second accuracy evaluation information to the server MTLF.

In a design, the server MTLF sends a second model evaluation request message to the AnLF. The second model evaluation request message includes the first model. The server MTLF receives a second model evaluation request response message from the AnLF. The second model evaluation request response message includes the second accuracy evaluation information.

In a design, that the server MTLF determines, based on the N pieces of first accuracy evaluation information, client MTLFs that participate in federated learning in the N candidate client MTLFs includes: The server MTLF determines, based on the N pieces of first accuracy evaluation information and the second accuracy evaluation information, the client MTLFs that are in the N candidate client MTLFs and that participate in the federated learning.

In a design, the second accuracy evaluation information is a reference value that is of the accuracy of the first model and that is fed back by the AnLF. The first accuracy evaluation information is an evaluated value that is of the accuracy of the first model and that is fed back by the candidate client MTLF. A difference between an evaluated value fed back by any one of the client MTLFs that participate in the federated learning and that are determined by the server MTLF and the reference value is less than or equal to a fourth threshold. For example, the server MTLF determines, in the N evaluated values, an evaluated value whose difference from the reference value is less than or equal to the fourth threshold. The server MTLF uses a candidate client MTLF corresponding to the evaluated value whose difference from the reference value is less than or equal to the fourth threshold as a client MTLF that participates in the federated learning.

In a design, the second accuracy evaluation information is a reference level that is of the accuracy of the first model and that is fed back by the AnLF. The first accuracy evaluation information is an evaluation level that is of the accuracy of the first model and that is fed back by the candidate client MTLF. A difference between an evaluation level fed back by the client MTLF that participates in the federated learning and that is determined by the server MTLF and the reference level is less than or equal to a fifth threshold. For example, the server MTLF determines, in the N evaluation levels, an evaluation level whose difference from the reference level is less than or equal to the fifth threshold. The server MTLF uses a candidate client MTLF corresponding to the evaluation level whose difference from the reference level is less than or equal to the fifth threshold as a client MTLF that participates in the federated learning.

In a design, the method further includes: The AnLF sends a model request message the server MTLF. The model request message includes at least target accuracy that needs to be met by a model. The server MTLF terminates the federated learning when third accuracy evaluation information that is of the first model and that is fed back by the client MTLF that participates in the federated learning meets a requirement of the target accuracy. Alternatively, when third accuracy evaluation information that is of the first model and that is fed back by the client MTLF that participates in the federated learning does not meet a requirement of the target accuracy, the server MTLF determines a second model based on a model parameter fed back by the client MTLF that participates in the federated learning and continues the federated learning by using the second model.

In a design, before the AnLF sends the model request message to the server MTLF, the method further includes: The AnLF receives an analytics request message from a user. The analytics request message includes at least one of the following: an analytics identifier, analytics filter information, or a target accuracy that needs to be met by the analytics. The AnLF determines that a local model of the AnLF cannot meet a requirement of the analytics request message, and that an MTLF that meets the requirement of the analytics request message cannot be found in a network repository function NRF.

According to a twentieth aspect, a data analytics method is provided. The method includes: An AnLF receives an analytics request message from a user. The analytics request message includes an analytics identifier and preferred accuracy of the analytics. The AnLF sends a model request message to a server MTLF when a local model of the AnLF cannot meet a requirement of the analytics request message and a model training logical function MTLF that meets the requirement of the analytics request message cannot be found in a network repository function NRF. The model request message includes at least one of the following: an analytics identifier, model filter information, or target accuracy that needs to be met by a model. The target accuracy that needs to be met by the model is determined based on the preferred analytics accuracy of the analytics, and the model filter information indicates a condition that needs to be met by training data in a model training process. The server MTLF determines, based on the model request message, to perform federated learning or not to perform the federated learning.

In a design, that the server MTLF determines, based on the model request message, to perform federated learning or not to perform the federated learning includes: determining a feature of the training data in the federated learning process based on the analytics identifier and/or the model filter information; and
determining to perform the federated learning if the feature of the training data is unrelated to a geographic location; or determining not to perform the federated learning if the feature of the training data is related to a geographic location.

In a design, that the server MTLF determines, based on the model request message, to perform federated learning or not to perform the federated learning includes: sending a first model evaluation request message to a client MTLF that participates in the federated learning, where the first model evaluation request message is used to request the client MTLF to report accuracy evaluation information of a local model; receiving a first model evaluation request response message from the client MTLF, where the first model evaluation request response message includes the accuracy evaluation message that is of the local model and that is reported by the client MTLF; and determining not to perform the federated learning if the accuracy evaluation information that is of the local model and that is fed back by the client MTLF meets the target accuracy; or determining to perform the federated learning if the accuracy evaluation information that is of the local model and that is fed back by the client MTLF does not meet the target accuracy.

In a design, when the server MTLF determines not to perform the federated learning, the method further includes: The server MTLF sends a model request response message to the AnLF. The model request response message includes a federated learning failure cause or an analytics aggregation indication. The analytics aggregation indication indicates the AnLF to determine a result of a current analytics task in an analytics aggregation manner.

In a design, when the server MTLF determines to perform the federated learning, the method further includes: sending a second model evaluation request message to the client MTLF that participates in the federated learning, where the second model evaluation request message includes a model obtained in this round of model training, and the second model evaluation request message is used to request the client MTLF to report accuracy evaluation information of the model obtained in this round of training; receiving a second model evaluation request response message from the client MTLF, where the second model evaluation request response message includes the accuracy evaluation information that is of the model obtained in this round of model training and that is reported by the client MTLF; and terminating the federated learning if the accuracy evaluation information that is of the model obtained in this round of model training and that is reported by the client MTLF meets the target accuracy.

### BRIEF DESCRIPTION OF DRAWINGS

FIG. 1 is a schematic diagram of a network architecture according to this application;
FIG. 2 is a schematic diagram of another network architecture according to this application;
FIG. 3 is a flowchart of a data analytics method according to this application;
FIG. 4 is another flowchart of a data analytics method according to this application;
FIG. 5 is still another flowchart of a data analytics method according to this application;
FIG. 6 is a schematic diagram of an apparatus according to this application;
FIG. 7 is another schematic diagram of an apparatus according to this application; and
FIG. 8 is a schematic diagram of a system according to this application.

### DESCRIPTION OF EMBODIMENTS

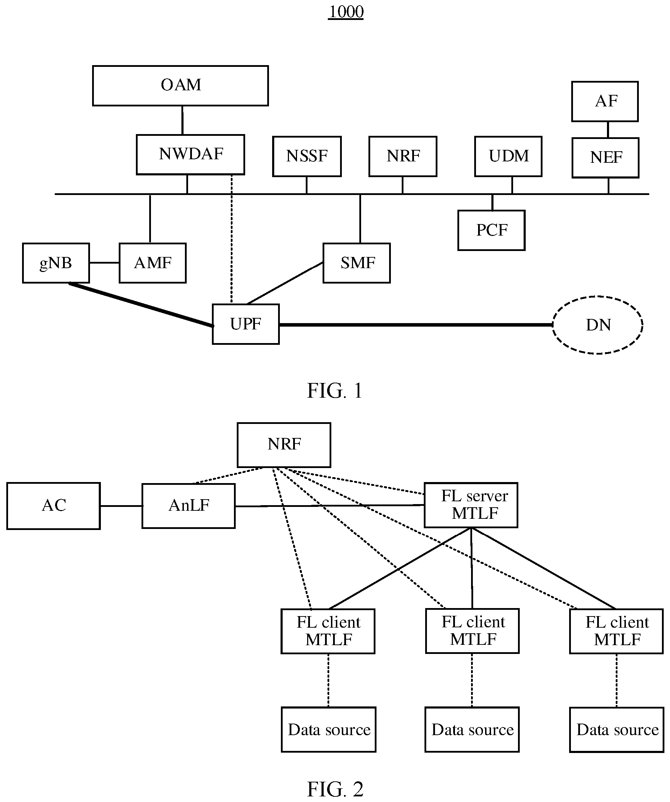

FIG. 1 is a schematic diagram of an architecture of a communication system 1000 to which an embodiment of this application is applied. As shown in FIG. 1, the communication system 1000 includes a core network. The core network includes one or more of the following entities.

An access and mobility management function network element is mainly used for attachment, mobility management, and a tracking area update procedure of a terminal in a mobile network. The access and mobility management network element processes a non-access stratum (non-access stratum, NAS) message, completes registration management, connection management, reachability management, tracking area list (tracking area list, TA list) allocation, mobility management, and the like, and transparently routes a session management (session management, SM) message to a session management network element. In a 5th generation (5th generation, 5G) communication system, the access and mobility management network element may be an access and mobility management function (access and mobility management function, AMF).

The session management network element is mainly used for session management such as session establishment, modification, and release in the mobile network. A specific function is, for example, allocating an internet protocol (internet protocol, IP) address to the terminal or selecting a user plane network element that provides a packet forwarding function. In the 5G communication system, the session management network element may be a session management function (session management function, SMF).

A policy control network element has a user subscription data management function, a policy control function, a charging policy control function, quality of service (quality of service, QoS) control, and the like. In the 5G communication system, the policy control network element may be a policy control function (policy control function, PCF). It should be noted that in an actual network, the PCF may be further divided into a plurality of entities based on layers or functions, for example, a global PCF and a PCF in a slice, or a session management PCF (session management PCF, SM-PCF) and an access management PCF (access management PCF, AM-PCF).

A network slice selection network element is mainly configured to select an appropriate network slice for a service of the terminal. In the 5G communication system, the network slice selection network element may be a network slice selection function (network slice selection function, NSSF) network element.

A unified data management network element is responsible for managing subscription information of the terminal. In the 5G communication system, the unified data management network element may be a unified data management (unified data management, UDM).

Data analysis network element: The data analysis network element collects network data from each network function (network function, NF), for example, the AMF, the SMF, or the PCF. The data analysis network element may indirectly collect network data from an application function (application function, AF) through a network exposure function (network exposure function, NEF), or directly collect the network data from the AF. The data analysis network element may also collect network data from an operation, administration, and maintenance (operation, administration, and maintenance, OAM) system. The data analysis network element may perform analysis and prediction based on the collected network data. The data analysis network element collects related network data, trains and fits a model by using the collected network data by using a machine learning technology, and then outputs an analytics service based on the model. In the 5G communication system, the data analysis network element may be a network data analytics function (network data analytics function, NWDAF) or a management data analytics system (management data analytics system, MDAS).

The user plane network element is mainly responsible for processing a user packet, for example, forwarding, charging, or lawful interception. The user plane network element may also be referred to as a protocol data unit (protocol data unit, PDU) session anchor (PDU session anchor, PSA). In the 5G communication system, the user plane network element may be a user plane function (user plane function, UPF). The UPF may directly communicate with the NWDAF through a similar service-oriented interface, or may communicate with the NWDAF in another manner, for example, through the SMF, through a private interface with the NWDAF, or through an internal interface.

The application function network element mainly supports interaction with a 3rd generation partnership project (3rd generation partnership project, 3GPP) core network to provide services, for example, affecting a data routing decision, a policy control function, or providing some third-party services for a network side. In the 5G communication system, the application function network element may be an AF.

A network exposure function network element is mainly configured to support capability and event exposure, for example, securely expose, to the outside, a service, a capability, and the like that are provided by a 3GPP network function. In the 5G communication system, the network exposure function network element may be a network exposure function (network exposure function, NEF).

A network repository network element is mainly configured to store a network functional entity and description information of a service provided by the network functional entity, and support service discovery, network element entity discovery, and the like. In the 5G communication system, the network repository function network element may be a network repository function (network repository function, NRF).

The operation, administration, and maintenance network element is mainly configured to manage resource configuration, performance statistics, fault alarm, and the like of a network device. In the 5G communication system, the operation, administration, and maintenance network element may be an OAM or the like.

In addition to the entities involved in the core network, the communication system 1000 may further include the following devices or network elements.

The terminal is a device that has a wireless transceiver function. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form used by the terminal are not limited in embodiments of this application. For ease of description, the terminal is used as an example below for description.

An access network (access network, AN) device is responsible for wireless side access of the terminal, and may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a wireless fidelity (wireless fidelity, Wi-Fi) system, or the like. The access network device may alternatively be a module or a unit that completes some functions of a base station, for example, may be a central unit (central unit, CU), or may be a distributed unit (distributed unit, DU). The CU completes functions of a radio resource control (radio resource control, RRC) protocol and a packet data convergence layer protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete a part or all functions of a physical (physical, PHY) layer. For specific descriptions of the foregoing protocol layers, refer to related technical specifications of 3GPP. The access network device may be a macro base station, may be a micro base station or an indoor base station, or may be a relay node, a donor node, or the like. A specific technology and a specific device form used by the access network device are not limited in embodiments of this application. For ease of description, an example in which the base station is used as the access network device is used below for description.

A data network (data network, DN) may be a service network that provides a data service for a user. For example, the DN may be an IP multi-media service (IP multi-media service) network or an internet (internet). The terminal device may establish a protocol data unit (protocol data unit, PDU) session from the terminal device to the DN, to access the DN.

In this application, to provide an analytics service, the data analysis network element trains a model and outputs an analytic result based on the model. For example, the data analysis network element is the NWDAF in the 5G communication system. The NWDAF may be divided into two parts: a model training logical function (model training logical function, MTLF) and an analytics inference logical function (analytics logical function, AnLF). The NWDAF may have only a function of the MTLF, only a function of the AnLF, or both the function of the MTLF and the function of the AnLF. The MTLF may be an independent network element or a functional unit in the NWDAF. Similarly, the AnLF may be an independent network element or a functional unit in the NWDAF. The MTLF is configured to: train a model based on collected data, and distribute a trained model to one or more AnLFs after model training is completed. The AnLF is configured to: perform inference by using the model, and provide an analytics service to each network element. For example, an internet of vehicles server may request the AnLF to predict network performance at a location within future 10 minutes. The network performance includes data like a maximum sending/receiving speed of a terminal at the location. The AnLF may collect related data of the terminal at the location, obtain a network performance prediction model from the MTLF, and input the collected data of the terminal into the network performance prediction model. An output of the model is a predicted maximum speed at which the terminal can send and receive data within the future 10 minutes, and then the output of the model is provided to the internet of vehicles server.

A plurality of NWDAFs are usually deployed in a real network. Each NWDAF usually has a service area. The service area of the NWDAF may be an area covered by one or more tracking areas (tracking areas, TAs). A TA includes one or more cells that broadcast a same tracking area code. When collecting original data for model training, an MTLF in the NWDAF is difficult to collect all the original data from distributed data sources in different areas. To resolve this problem, the MWDAF trains a model by using a federated learning (federated learning, FL) technology. In a machine learning process, an original training data set does not need to be transmitted to an MWDAF in a centralized manner, and only MTLFs in the plurality of NWDAFs need to cooperate with each other. Each participant can perform joint modeling by using other data, perform joint data training through federated learning, and establish a shared machine learning model. An MTLF that organizes the federated learning is referred to as a federated learning server MTLF (FL Server MTLF), and may be referred to as a server MTLF for short. An MTLF that participates in the federated learning is referred to a federated learning client MTLF (FL Client MTLF), and may be referred to as a client MTLF for short.

As shown in FIG. 2, an analytics service consumer (analytics consumer, AC) may send an analytics request subscription message, an analytics information request message, or the like to an AnLF, to request the AnLF to perform an analytics service. The AC may be a network element, an application function, an OAM, or the like. This is not limited. When a local model of the AnLF cannot complete the analytics task and an MTLF that can perform the analytics task is not found in an NRF, an MTLF having a server role may be found in the NRF and is referred to as a server MTLF. The AnLF may send a model request message to the found server MTLF, to request the server MTLF to organize federated learning and jointly train a model, to complete the analytics task. Specifically, when receiving the model request message from the AnLF, the server MTLF may determine, by querying the NRF, a plurality of client MTLFs that participate in the federated learning. Each client MTLF corresponds to a different data source (data source). The data source may include local data collected by the client MTLF. The server MTLF sends request messages to the determined client MTLFs. The request message is used to request the client MTLFs to participate in the federated learning. The request message may include an analytics identifier, filter information, a federated learning group identifier, and the like. After determining to join a federated learning group, the client MTLFs collect data for model training from each data source based on the analytics identifiers and the filter information, where the data may be referred to as training data. The client MTLFs send response messages for joining the federated learning group to the server MTLF. After receiving the response messages for joining the federated learning group, the server MTLF organizes all the client MTLFs that participate in the federated learning to perform the federated learning together. Specifically, the server MTLF sends an initial model to each of the client MTLFs. Each client MTLF trains the initial model by using locally collected training data and updates a model parameter. Each client MTLF sends a model parameter obtained through local training to the server MTLF. The server MTLF aggregates model parameters sent by the client MTLFs. If accuracy of a model obtained through the aggregation meets target accuracy, or a quantity of times of joint learning reaches a preset quantity, the federated learning is terminated, and the model obtained through training is sent to the AnLF. The AnLF may analyze the analytics task based on the model obtained through training, and return an analytics result to the AC. Alternatively, if the model obtained through the aggregation cannot meet target accuracy, or a quantity of times of federated learning does not reach a preset quantity, the server MTLF may send the model obtained through the aggregation in a last round as an initial model in a next round of model training to each of the client MTLFs, and organize the client MTLFs to perform the next round of model training.

In a design, when receiving the model request message from the AnLF, the server MTLF directly organizes the client MTLFs to perform the federated learning. However, in reality, distribution features of a large amount of data in a network are different. Performing the federated learning by using data with different distribution features may cause low accuracy of a model obtained through the federated learning. For example, for an analytics task for predicting network load, a model needs to be trained to predict the network load. It is assumed that the server MTLF determines that three client MTLFs participate in federated learning. Areas to which the three client MTLFs belong are a commercial area, an office area, and a residential network. In the residential area, network load is heavy in the evening and morning and is light in the daytime on weekdays. In the office area, network load is heavy in the daytime on weekdays and is light in weekends. In the commercial area, network load is heavy on weekends and is light on weekdays. If all the three client MTLFs whose service scopes are the residential area, the commercial area, and the office area perform model training based on locally collected data, and send updated model parameters to the server MTLF, the server aggregates the model parameters sent by the three client MTLFs. Consequently, prediction accuracy of a model obtained through the aggregation may be low. How to determine client MTLFs that participate in federated learning is a technical problem to be resolved in this application.

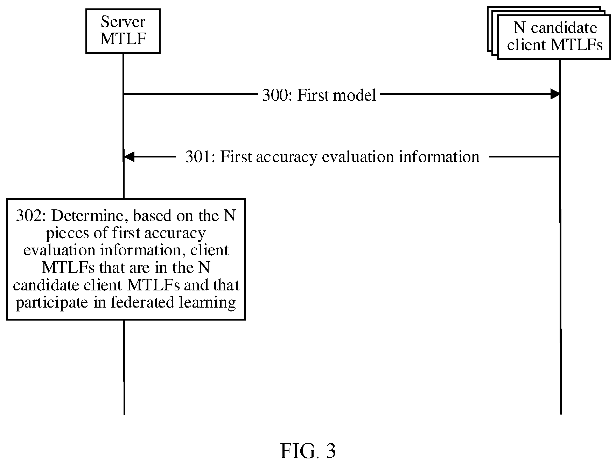

This application provides a data analytics method. In the method, a server MTLF sends a first model to each of determined candidate client MTLFs that participate in federated learning. When receiving the first model, each of the candidate client MTLFs that participate in the federated learning determines accuracy evaluation information of the first model by using local data, and feeds back the determined accuracy evaluation information to the server MTLF. The server MTLF determines, based on the accuracy evaluation information that is of the model and that is fed back by the candidate client MTLF, client MTLFs that participate in the federated learning in the candidate client MTLFs. For example, client MTLFs whose feedback evaluation information of models is similar are selected to participate in the federated learning. Optionally, for the client MTLFs whose evaluation information of the model is similar, distribution of local data of the client MTLFs is also similar. Selecting the client MTLFs whose distribution of the local data is similar to perform the federated learning can improve prediction accuracy of a model trained through the federated learning. As shown in FIG. 3, a procedure of a data analytics method is provided and includes at least the following steps.

Step 300: A server MTLF sends a first model to each of N candidate client MTLFs, where N is an integer greater than 1.

For example, the server MTLF sends a first model evaluation request (model evaluation request) message to each of the N candidate client MTLFs. The first model evaluation request message includes the first model.

Step 301: Each of the N candidate client MTLFs sends first accuracy evaluation information to the server MTLF.

The server may obtain N pieces of first accuracy evaluation information based on the first accuracy evaluation information sent by the N candidate client MTLFs. For example, when receiving the first model, any one of the N candidate client MTLFs may determine accuracy evaluation information of the first model by using local data (local data). The accuracy evaluation information is referred to as first accuracy evaluation information. The local data of the candidate client is data collected by the candidate client MTLF in a service area of the candidate client MTLF. In a federated learning process, local data collected by a client MTLF is not sent to another client MTLF. The local data may also be referred to as a local data set (local data set). For example, the client MTLF determines accuracy evaluation information of the first model by using a local training data set. The training data set includes input data and label data. The client MTLF may input the input data into the first model and determine prediction information of the first model based on an output of the first model. For example, the output of the first model may be the prediction information, or the output of the first output may be further processed to obtain the prediction information. The processing includes but is not limited to: transforming the output of the first model in a dimension like time domain, frequency domain, or space domain, to obtain the prediction information, and the like. In subsequent descriptions, an example in which the output of the first model is used as the prediction information of the first model is used for description. The prediction information of the first model is compared with the label data in the training data set, to determine the first accuracy evaluation information of the first model in a training phase. The accuracy evaluation information of the first model may be an evaluated value. The evaluated value includes at least one of the following: a correct rate, an error rate, a precision rate, a recall rate, a mean absolute error, a mean absolute percentage error, a mean square error, or the like. For example, when the first model is a model for calculating classification, the evaluated value of the first model may be the correct rate, the error rate, the precision, the recall rate, or the like of the model. Alternatively, when the first model is a model for calculating regression, the evaluated value of the first model may be the mean absolute error, the mean absolute percentage error, the mean square error, or the like of the model. Alternatively, the accuracy evaluation information of the first model may be an evaluation level. Further, the candidate client MTLF may determine, based on a preset correspondence between an evaluated value range and an evaluation level, an evaluation level corresponding to the evaluated value of the first model. The candidate client MTLF feeds back the evaluation level of the first model to the server MTLF. For example, the evaluation level includes a low accuracy level, a medium accuracy level, and a high accuracy level, and each evaluation level corresponds to a different evaluated value range. When determining the evaluated value of the first model, the candidate client MTLF may determine, based on the correspondence between the evaluation level and the evaluated value range, that the evaluation level corresponding to the evaluated value of the first model is low, medium, or high. Optionally, each of the N candidate client MTLFs may send a first model evaluation request response (model evaluation request response) message to the server MTLF. The first model evaluation request response message includes the first accuracy evaluation information determined by the candidate client MTLF.

Step 302: The server MTLF determines, based on the N pieces of first accuracy evaluation information, client MTLFs that participate in federated learning in the N candidate client MTLFs.

In a design, the N pieces of first accuracy evaluation information are N evaluated values that are of accuracy of the first model and that are fed back by the N candidate client MTLFs. A difference between evaluated values fed back by any two of the client MTLFs that participate in the federated learning is less than or equal to a first threshold. The first threshold is preset, specified in a protocol, or pre-configured in or pre-notified to the server MTLF, or the like. This is not limited.

For example, the client MTLFs that are in the N candidate clients and that participate in the federated learning may be determined through clustering. An implementation is as follows.
1. Obtain the N evaluated values that are of the accuracy of the first model and that are fed back by the N candidate clients.
2. Determine a largest evaluated value and a smallest evaluated value in the N evaluated values. If a difference between the largest evaluated value and the smallest evaluated value is less than or equal to the first threshold, it is considered that all the N candidate clients meet a condition and can participate in the federated learning; or perform step 3 if a difference between the largest evaluated value and the smallest evaluated value is greater than the first threshold.
3. Determine a mean of the largest evaluated value and the smallest evaluated value in the N evaluated values. In the N evaluated values, a quantity of evaluated values greater than the mean is determined as first data, and a quantity of evaluated values less than the mean is determined as a second quantity. If the first quantity is greater than the second quantity, a candidate client MTLF corresponding to the smallest evaluated value is removed from a federated learning group, to form a new federated learning group. Alternatively, if the first quantity is less than or equal to the second quantity, a candidate client MTLF corresponding to the largest evaluated value is removed from a federated learning group, to form a new federated learning group. Proceed to step 2. In the new federated learning group, a largest evaluated value and a smallest evaluated value are determined, a value relationship between a difference between the largest evaluated value and the smallest evaluated value and the first threshold is determined, and step 3 is repeatedly performed until a difference between evaluated values fed back by any two of the client MTLFs that participate in the federated learning is less than or equal to the first threshold.

Alternatively, the client MTLFs that are in the N candidate clients and that participate in the federated learning may be determined by using a maximum distance method. An implementation is as follows.
1. Determine an absolute value of a difference between any two of the N evaluated values that are of the accuracy of the first model and that are fed back by the N candidate clients, where the absolute value of the difference between the any two evaluated values is used as a distance between the two evaluated values.
2. If the distance between any two of the N evaluated values is less than or equal to the first threshold, all the N candidate client MTLFs meet a condition and can participate in the federated learning; or step 3 is performed if the distance between any two of the N evaluated values is greater than the first threshold.
3. Determine a sum of an evaluated value of each client MTLF and an evaluated value of any one of other client MTLFs, accumulate the sum of the evaluated value of the client MTLF and the evaluated value of any one of the other client MTLFs to obtain an accumulated sum as a distance sum of the client MTLF, calculate a distance sum of each client MTLF, and remove a client MTLF with a largest distance sum from a federated learning group, to form a new federated learning group. Proceed to step 2. In the new federated learning group, a value relationship between evaluated values corresponding to any two client MTLFs and the first threshold is determined, and step 3 is repeatedly performed until a difference between evaluated values fed back by any two of the client MTLFs that participate in the federated learning is less than or equal to the first threshold.

Alternatively, the client MTLFs that are in the N candidate clients and that participate in the federated learning are determined by using a center-of-mass algorithm. An implementation is as follows.
1. Obtain the N evaluated values that are of the accuracy of the first model and that are fed back by the N candidate clients.
2. Determine a largest evaluated value and a smallest evaluated value in the N evaluated values; if a difference between the largest evaluated value and the smallest evaluated value is less than or equal to the first threshold, all the N candidate client MTLFs meet a condition and can participate in the federated learning, and terminate the procedure; or continue to perform step 3 if a difference between the largest evaluated value and the smallest evaluated value is greater than the first threshold.
3. Determine a mean of the N evaluated values; and determine an absolute value of a difference between each evaluated value and the mean, where the absolute value of the difference is referred to as a distance from a candidate client MTLF corresponding to the evaluated value to a center of mass.
4. Determine a distance from each candidate client MTLF to the center of mass, and remove a client MTLF with a largest distance to the center of mass from a federated learning group to form a new federated learning group. Proceed to step 2. In the new federated learning group, a largest evaluated value and a smallest evaluated value are determined, a value relationship between a difference between the two evaluated values and the first threshold is determined, and step 3 and step 4 are repeatedly performed until a difference between evaluated values fed back by any two of the client MTLFs that participate in the federated learning is less than or equal to the first threshold.

In another design, the N pieces of first accuracy evaluation information are N evaluation levels that are of the accuracy of the first model and that are fed back by the N candidate client MTLFs, and evaluation levels fed back by the client MTLFs that participate in the federated learning meet a target evaluation level. For example, the server MTLF may determine, in the N evaluation levels, an evaluation level whose difference from the target evaluation level is less than or equal to a third threshold. The server MTLF uses a candidate client MTLF corresponding to the evaluation level whose difference from the target evaluation level is less than or equal to the third threshold as a client MTLF that participates in the federated learning. The third threshold is preset, specified in a protocol, or pre-notified to or pre-configured in the server MTLF. This is not limited. The target evaluation level is preset, specified in a protocol, or pre-notified to or pre-configured in the server MTLF. This is not limited. For example, the target evaluation level may be pre-notified by an AnLF to the server MTLF.

For example, 10 evaluation levels are obtained through pre-division, and indexes of the evaluation levels are 1 to 10. A larger value of an index of an evaluation level indicates higher accuracy of a model corresponding to the evaluation level. The server MTLF may select, from the N evaluation levels fed back by the N candidate clients, an evaluation level whose difference from the target evaluation level is less than or equal to the third threshold. For example, N is 3. Evaluation levels fed back by three candidate client MTLFs are respectively an evaluation level 7, an evaluation level 9, and an evaluation level 5. The server MTLF may select, from the three evaluation levels, an evaluation level whose difference from a target evaluation level 8 is less than or equal to the third threshold (where for example, the third threshold is 1). If the evaluation level 7 and the evaluation level 9 are selected, candidate client MTLFs corresponding to the evaluation level 7 and the evaluation level 9 participate in the federated learning, and a candidate client MTLF corresponding to the evaluation level 5 is removed from a federated learning group and no longer participates in the federated learning.

Optionally, the server MTLF may further send the first model to an AnLF and receive second accuracy evaluation information from the AnLF. The second accuracy evaluation information indicates accuracy evaluation information that is of the first model and that is determined by the AnLF by using local data. For example, the server MTLF may send a second model evaluation request message to the AnLF. The second model evaluation request message includes the first model. The server MTLF receives a second model evaluation request response message from the AnLF. The second model evaluation request response message includes the second accuracy evaluation information. When receiving the first model, the AnLF may determine accuracy of the first model by using collected local data. The accuracy of the first model is referred to as second accuracy evaluation information. The local data of the AnLF is data collected by the AnLF in a service area of the AnLF. For example, the AnLF may determine the second accuracy evaluation information of the first model based on historically collected local data, and determine accuracy evaluation information of the first model by comparing an inference result of the first model with observed label data (that is, actual data from a network). For example, the first model is configured to predict terminal performance 10 minutes later. In this case, the AnLF may use terminal data locally collected 10 minutes ago as an input, and input the terminal data to the first model. An output of the first model may be considered as the inference result of the first model, and the inference result of the first model may be the predicted terminal performance 10 minutes later. The AnLF compares the predicted terminal performance that is of a terminal 10 minutes later and that is inferred by the first model with actual performance of the terminal 10 minutes later collected in the network, to determine second accuracy evaluation information. The second accuracy evaluation information may be an evaluated value of the accuracy of the first model or an evaluation level of the accuracy of the first model. For the evaluated value and the evaluation level, refer to the foregoing descriptions. In this design, the server MTLF may determine, based on the N pieces of first accuracy evaluation information fed back by the N candidate client MTLFs and the second accuracy evaluation information fed back by the AnLF, the client MTLFs that are in the N candidate client MTLFs and that participate in the federated learning. For example, the N pieces of first accuracy evaluation information fed back by the N candidate client MTLFs are N evaluated values, the second accuracy evaluation information fed back by the AnLF is an evaluated value, and the evaluated value is referred to as a reference value. In this case, a difference between an evaluated value fed back by any one of the client MTLFs that are in the N candidate client MTLFs and that participate in the federated learning and the reference value is less than or equal to a fourth threshold. The fourth threshold may be preset, specified in a protocol, or pre-notified to or pre-configured in the server MTLF. This is not limited. For example, the server MTLF may determine, in the N evaluated values, an evaluated value whose difference from the reference value is less than or equal to the fourth threshold. The server MTLF uses a candidate client MTLF corresponding to the evaluated value whose difference from the reference value is less than or equal to the fourth threshold as a client MTLF that participates in the federated learning. Alternatively, the N pieces of first accuracy evaluation information fed back by the N candidate clients are N evaluation levels, the second accuracy evaluation information fed back by the AnLF is an evaluation level, and the evaluation level may be referred to as a reference level. A difference between an evaluation level fed back by the client MTLF that is in the N candidate client MTLFs and that participates in the federated learning and the reference level is less than or equal to a fifth threshold. The fifth threshold is preset, specified in a protocol, or pre-notified to or pre-configured in the server MTLF. This is not limited. For example, the server MTLF determines, in the N evaluation levels, an evaluation level whose difference from the reference level is less than or equal to the fifth threshold. The server MTLF uses a candidate client MTLF corresponding to the evaluation level whose difference from the reference level is less than or equal to the fifth threshold as a client MTLF that participates in the federated learning. For example, three evaluation levels fed back by three client MTLFs are respectively evaluation levels 8, 9, and 5. The evaluation level fed back by the AnLF is a reference level 8. A difference between each of the evaluation level 8 and the evaluation level 9 and the reference level 8 is less than or equal to the fifth threshold (where the fifth threshold may be 1). A difference between the evaluation level 5 and the reference level 8 is greater than the fifth threshold. In this case, the server MTLF may select candidate client MTLFs corresponding to the evaluation level 8 and the evaluation level 9 to participate in the federated learning, and remove a candidate client corresponding to the evaluation level 5 from a federated learning group.

In the foregoing design, if a feature of local data of a client MTLF tends to be consistent with or is similar to a feature of the local data of the AnLF, a difference between first accuracy evaluation information that is of the first model and that is determined by the client MTLF and the second accuracy evaluation information that is of the first model and that is determined by the AnLF should be small. If the difference between the first accuracy evaluation information and the second accuracy evaluation information is too large, the feature of the local data of the client MTLF is quite different from the feature of the local data of the AnLF. Through the foregoing design, the candidate client MTLF whose feature of the local data is quite different from the feature of the local data of the AnLF is removed from the N candidate client MTLFs, to ensure that a feature of local data of the client MTLF that participates in the federated learning is similar to the feature of the local data of the AnLF and improve inference accuracy of a model of the federated learning.

Optionally, the first model may be an initial model, an intermediate model, or a final model in a federated learning process. The initial model refers to an initial public model that is determined by the server MTLF and that is used for model training in the federated learning process, or is described as an initial public model sent by the server MTLF to a client MTLF in a first round of model training process. The intermediate model refers to a public model that is sent by the server MTLF to a client MTLF in a middle round of model training process and that is obtained by aggregating and updating parameters in a previous round of federated learning, and may also be considered as an initial model in this round of federated learning training. The final model refers to a model obtained through federated learning after a last round of model training process, and the final model may be considered as a model fed back by the server MTLF to the AnLF.

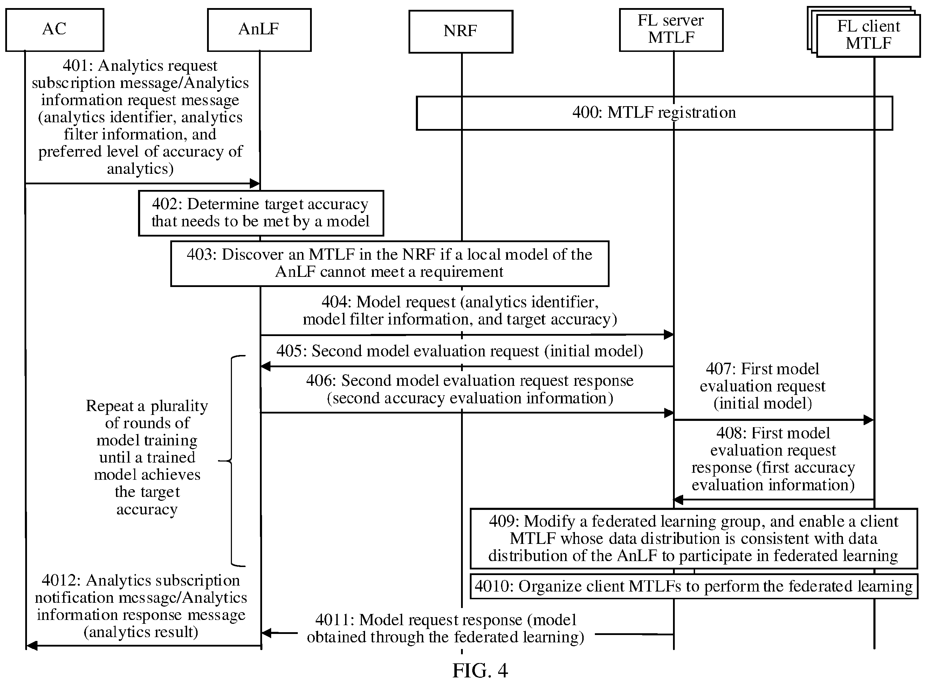

In a possible implementation, a round of model training process includes: The server MTLF may determine, in candidate client MTLFs, client MTLFs that participate in federated learning. The server MTLF sends an initial model to each client MTLF. Each client MTLF trains the initial model by using local data and updates a parameter of the initial model. Each client MTLF sends an updated parameter of the initial model to the server MTLF. The server MTLF aggregates the parameter that is of the initial model and that is fed back by each client MTLF, to determine a model obtained in this round of training. The model obtained in this round of training may be used as an initial model in a next round of model training. The client MTLFs that participate in the federated learning in this round are used as candidate client MTLFs in the next round of model training. For example, in a first round of model training process, the server MTLF may determine, by querying an NRF, N candidate clients that participate in the federated learning. The server MTLF sends a model evaluation request message to each of the N candidate clients. The model evaluation request message includes the initial model. Each candidate client verifies accuracy of the initial model by using the local data as a validation set, determines accuracy evaluation information of the initial model, and feeds back the accuracy evaluation information to the server MTLF. The server MTLF determines, based on the accuracy evaluation information that is of the initial model and that is fed back by the N candidate client MTLFs, client MTLFs that participate in the federated learning. For example, in the foregoing evaluation process, the server MTLF determines that M client MTLFs in the N candidate client MTLFs may participate in the federated learning, where M is a positive integer less than or equal to N. In the first round of model training process, the server MTLF sends the initial model to each of the M client MTLFs, and each of the M client MTLFs trains the initial model. The server MTLF aggregates model parameters fed back by the M client MTLFs, to determine a model obtained in the first round of training. The first round of training process is completed. In a second round of model training process, the M client MTLFs that participate in the federated learning in the first round are used as candidate clients in a second round of model training. The server MTLF sends, to each of the M candidate clients, the model obtained in the first round of training as an initial model in the second round of training. The M candidate clients verify accuracy evaluation information of the initial model by using local data, and feed back the accuracy evaluation information to the server MTLF. The server MTLF determines, based on the accuracy evaluation information fed back by the M candidate clients, X client MTLFs that participate in the federated learning, where X is an integer less than or equal to M. Subsequently, the server MTLF sends the initial model in the second round of training to each of the X clients. Each of the X clients trains the initial model by using local data, updates a parameter of the model, and sends an updated parameter of the model to the server MTLF. The server MTLF aggregates the model parameters fed back by the X clients, to obtain a model in the second round of training, and the like. Other subsequent rounds of model training processes are similar to the foregoing round of model training process, and details are not described again. If a quantity of rounds of federated learning reaches a preset value, or if accuracy evaluation information fed back by client MTLFs that participate in the federated learning meets the target accuracy, the federated learning process terminates. It should be noted that in the foregoing descriptions, before each round of federated learning, the server MTLF sends a model evaluation request message to each candidate client MTLF and determines, based on accuracy evaluation information that is of a model and that is fed back by each client MTLF, client MTLFs that participate in the federated learning in this round of federated learning process. Alternatively, the process may be described as follows: After each round of learning terminates, the server MTLF sends a model evaluation request message to each of the client MTLFs. The model evaluation request message carries the model obtained in this round of training. The client MTLFs may verify, by using local data, accuracy evaluation information of the model obtained through local training, and feed back the accuracy evaluation information to the server MTLF. The server MTLF determines, based on the accuracy evaluation information that is of the model and that is fed back by each client MTLF, whether to continue the federated learning. For example, if the accuracy evaluation information that is of the model and that is fed back by each client MTLF meets a requirement of the target accuracy, the federated learning is terminated; or if the accuracy evaluation information that is of the model and that is fed back by each client MTLF does not meet a requirement of the target accuracy, a next round of federated learning is continued. That is, in this application, after a round of model training terminates, the server MTLF sends a model evaluation request message to each of the client MTLFs. The model evaluation request message carries the model obtained in this round of training. The client MTLFs determine accuracy evaluation information of the model in this round of training by using local data, and feed back the accuracy evaluation information to the server MTLF. The server MTLF may perform the following operations based on the accuracy evaluation information fed back by each client MTLF: first, determining whether need to continue the federated learning; and second, if determining to continue a next round of federated learning, determining, based on the accuracy evaluation information fed back by each client, client MTLFs that participate in the next round of federated learning, and the like The target accuracy may be preset, specified in a protocol, pre-notified to or pre-configured in the server MTLF, or the like. This is not limited. For example, in an implementation, the AnLF sends a model request message to the server MTLF. The model request message includes the target accuracy. When receiving the model request message, the server MTLF may perform model training in a federated learning process based on the foregoing method. When completing the model training, the server MTLF sends a model request response message to the AnLF. The model request response message includes a model obtained through federated learning. Optionally, before the AnLF sends the model request message to the server MTLF, the method further includes: The AnLF receives an analytics request from a user. The analytics request includes at least one of the following: an analytics identifier, analytics filter information, or target accuracy that needs to be met by the analytics. The analytics identifier may identify an analytics task. The analytics filter information indicates a condition that needs to be met by training data in the federated learning process, or is described as that the analytics filter information is used to determine model filter information. The model filter information indicates a condition that needs to be met by the training data in the federated learning process, and the like. The target accuracy that needs to be met by the analytics may be used to determine target accuracy that needs to be met by a model. The target accuracy may be a target accuracy value, a target accuracy level, or the like. This is not limited. When determining that a local model of the AnLF cannot meet a requirement of the analytics request message, and an MTLF that meets the requirement of the analytics request message cannot be found in an NRF, the AnLF may query the NRF for an MTLF having a server role as the server MTLF. The AnLF sends the model request message to the server MTLF, and performs the foregoing method. When receiving a model that is of the federated learning and that is fed back by the server, the AnlF may perform the foregoing analytics task based on the model, and feed back an analytics result to the user. For a more detailed process, refer to descriptions in FIG. 4.

In a design, in each round of federated learning process, when receiving accuracy evaluation information fed back by each candidate client MTLF, the server MTLF may determine whether the accuracy evaluation information fed back by each candidate client MTLF meets a requirement of target accuracy. Optionally, the accuracy evaluation information fed back by the candidate client may be referred to as third accuracy evaluation information, and the third accuracy evaluation information is the same as or different from the foregoing first accuracy evaluation information. This is not limited. If the accuracy evaluation information fed back by each candidate client MTLF meets the requirement of the target accuracy, the federated learning terminates. If the accuracy evaluation information fed back by each candidate client MTLF does not meet the requirement of the target accuracy, a second model is determined based on an updated parameter that is of the model and that is fed back by each candidate client MTLF, which may be referred to as an updated parameter of the first model. The second model may be an intermediate model in the federated learning process. In a next round of model training, the server MTLF sends the second model to each candidate client MTLF, to perform a next round of federated learning.

For the solution in which the candidate clients feed back the first accuracy evaluation information to the server MTLF, the AnLF feeds back the second accuracy evaluation information to the server MLTF, and the server MTLF determines, based on the first accuracy evaluation information and the second accuracy evaluation information, the client MTLFs that participate in the federated learning, as shown in FIG. 4, a procedure of a data analytics method is provided and includes at least the following steps.

Step 400: Each MTLF registers information about the MTLF with an NRF.

For example, each MTLF may register a server role or a client role supported by the MTLF in a federated learning process with the NRF. Optionally, each MTLF may further register, with the NRF, an analytics identifier (analytics ID) corresponding to a model that can be provided by the MTLF, analytics filter information (analytics filter information), and accuracy evaluation information of the model that can be provided by the MTLF.

Step 401: An analytics service consumer AC sends an analytics request subscription message or an analytics information request message to an AnLF. The analytics request subscription message or the analytics information request message carries at least one of the following: an analytics identifier (analytics ID), analytics filter information, or a preferred level of accuracy of analytics (preferred level of accuracy of analytics).

The analytics service consumer AC may be a network element, an application function, an OAM, or the like. This is not limited. The analytics identifier identifies an analytics task. The analytics filter information may indicate an analytics object, an analytics output range, or the like. For example, the analytics filter information may be a network slice that is used for an internet of vehicles service and that is specified by a network slice identifier. The preferred level of accuracy of analytics may be data like accuracy, or may be an accuracy level. For example, the accuracy level may be high, medium, or low. For example, an internet of vehicles server requests the AnLF to predicate quality of service of a network slice of the internet of vehicles service at a location within future 10 minutes. The analytics identifier may indicate a quality of service prediction service, the analytics filter information indicates to predict the network slice of the internet of vehicles service, and the preferred level of accuracy of analytics is high.

Step 402: The AnLF determines, based on the message received in step 401, at least one of the following: an analytics identifier, model filter information (model filter information), or target accuracy that needs to be achieved by a model.

The AnLF may determine the model filter information based on the analytics filter information in step 401. The model filter information may indicate a condition that needs to be met by training data in the federated learning process. Alternatively, the analytics filter information may not be carried in step 401. The AnLF may determine the model filter information in another manner. This is not limited. In subsequent model training and federated learning processes, model training may be performed by using data that meets the condition indicated by the model filter information. A parameter type included in the model filter information is the same as a parameter type included in the analytics filter information. Optionally, a parameter value of each type of parameter included in the model filter information may also be the same as a parameter value of each type of parameter included in the analytics filter information. In other words, content included in both the model filter information and the analytics filter information may be the same. For example, the model filter information may be a specific network area or network slice identifier, for example, single-network slice selection assistance information (single-network slice selection assistance information, S-NSSAI), a specified specific network slice, or a specific application service specified by an application identifier (application ID). For example, an analytics identifier carried in an analytics request message sent by the internet of vehicles server to the AnLF is a quality of service prediction service, and analytics filter information indicates to predict a network slice for an internet of vehicles service. In this case, the AnLF may determine that a condition that needs to be met by a model that provides an inference service for the analytics request is that the analytics identifier is the quality of service prediction service, and the model filter information is the slice of the internet of vehicles service.

The AnLF may determine target accuracy of a model based on the level of accuracy of analytics in step 401. The target accuracy of the model may be a target accuracy value of the model, a target accuracy level of the model, or the like. As described above, the preferred level of accuracy of analytics may be data like accuracy, and the preferred level of accuracy of analytics or the like may be converted into a preferred target accuracy value or the like of the model. For example, when the model is a model for calculating classification, the target accuracy value of the model may be a correct rate, an error rate, precision, or a recall rate. Alternatively, when the model is a model for calculating regression, the target accuracy value of the model may be a mean absolute error, a mean absolute percentage error, a mean square error, or the like. Further, the target accuracy value of the model may be converted into a target accuracy level of the model. For example, the target accuracy level corresponding to the target accuracy value is determined based on a correspondence between the target accuracy value and the target accuracy level. In other words, in this application, the target accuracy that needs to be achieved by the model may be the target accuracy value or may be the target accuracy level. The target accuracy that needs to be achieved by the model reflects a requirement on an accuracy level of the model trained through the federated learning. For example, the accuracy of the model may be verified in the following manner: inputting verification data into a model, comparing an output of the model with an accurate output corresponding to the verification data, determining accuracy of the model, and the like.

Step 403: The AnLF determines whether a local model of the AnLF meets requirements of the analytics identifier, the model filter information, and the target accuracy in step 402. If the local model of the AnLF can meet the requirements, the AnLF performs model inference by using the local model, and feeds back an inference result as a result of the foregoing analytics task to the analytics service consumer AC. If the local model of the AnLF cannot meet the requirements, the AnLF queries the NRF for an MTLF that can meet the requirements of the analytics identifier, the model filter information, and the target accuracy. If the MTLF that meets the requirements can be found, the NRF feeds back an access address of the MTLF that meets the requirements to the AnLF. The AnLF sends a model request message to the MTLF based on the access address of the MTLF, and the MTLF may return a model request response message to the AnLF. The model request response message includes a model that meets the requirements and that is fed back by the MTLF. The AnLF performs model inference by using the feedback model that meets the requirements, and feeds back an inference result as a result of the foregoing analytics task to the AC. Alternatively, if an MTLF that meets the requirements cannot be found in the NRF either, the AnLF may query the NRF for an MTLF registered as a server role in step 400, and return an access address of the MTLF registered as the server role to the AnLF. The AnLF performs subsequent step 404 and sends a model request message to the MTLF registered as the server role. The foregoing process may be considered as a process in which the AnLF discovers the MTLF.

For example, the analytics identifier determined by the AnLF based on the request sent by the AC is quality of service prediction, the model filter information is network prediction of an internet of vehicles service, and the target accuracy is high. In this case, the AnLF may determine whether the local model can meet the conditions. If the local model meets the conditions, the AnLF performs model inference by using the local model, and uses an inference result as a result of the analytics. Alternatively, if the local model cannot meet the conditions, the AnLF may query the NRF for an MTLF that meets the conditions. For example, in step 400, if an analytics identifier registered by an MTLF with the NRF is the quality of service prediction, analytics filter information is the network prediction of the internet of vehicles service, and accuracy evaluation information of the model is high, the MTLF may be considered as an MTLF that meets the conditions. The NRF returns an access address of the MTLF that meets the conditions to the AnLF, and the AnLF performs model inference by using a model provided by the MTLF that meets the conditions. Alternatively, if an MTLF that meets the conditions cannot be found in the NRF either, the AnLF may query the NRF for an MTLF registered as a server role in step 400, and return an access address of the MTLF to the AnLF.

Step 404: The AnLF sends the model request message to a server MTLF. The model request message includes the analytics identifier, the model filter information, the target accuracy that needs to be met by the model, and the like.

Step 405: The server MTLF sends a second model evaluation request message to the AnLF. The second model evaluation request message carries an initial model.

Step 406: The AnLF determines second accuracy evaluation information of the initial model by using local data. The AnLF sends a second model evaluation request response message to the server. The second model evaluation request response message includes the second accuracy evaluation information of the initial model.

The second accuracy evaluation information may be an evaluated value of accuracy of the initial model. For example, the AnLF inputs locally collected data into the initial model, compares an output of the initial model with a label of the local data, and determines the accuracy evaluated value of the initial model. Alternatively, the second accuracy evaluation information may be an evaluation level of accuracy of the initial model. The AnLF may further determine the evaluation level of the accuracy of the initial model based on an evaluated value of accuracy of the initial model.

Step 407: The AnLF determines, through the NRF, N candidate client MTLFs that participate in federated learning, where N is an integer greater than 1. The AnLF sends a first model evaluation request message to each of the N candidate clients MTLFs. The first model evaluation request message includes the initial model.

Step 408: Each of the N candidate client MTLFs determines first accuracy evaluation information of the initial model by using locally collected data. This process is similar to the process in which the AnLF determines the second accuracy evaluation information. For details, refer to the foregoing descriptions. Each of the N candidate client MTLFs sends a first model evaluation request response message to the AnLF. The first model evaluation request response message includes the first accuracy evaluation information of the initial model.

Step 409: The server MTLF determines, based on the N pieces of first accuracy evaluation information and the second accuracy evaluation information, client MTLFs that participate in the federated learning in the N candidate client MTLFs. The process may be described as follows: The server MTLF modifies a federated learning group including the N client MTLFs, and enables client MTLFs whose data distribution is consistent with data distribution of the AnLF to participate in the federated learning.

For example, the server MTLF may select, from the N pieces of first accuracy evaluation information, first accuracy evaluation information that is consistent with a second evaluation level of accuracy or close to a second evaluated value of accuracy, and use a client MTLF corresponding to the first accuracy evaluation information that is consistent with the second evaluation level of the accuracy or close to the second evaluated value of the accuracy as a client MTLF that participates in a next round of federated learning. For a detailed process, refer to the descriptions in FIG. 3.

Step 4010: The server MTLF organizes the determined client MTLFs to perform the federated learning by using local data.

In a first round of federated learning, each of the N candidate clients performs, by using the locally collected data, model training on the initial model provided by the server MTLF, and updates a parameter of the initial model. Each of N candidate client MTLFs sends an updated parameter of the initial model to the server MTLF. The server MTLF aggregates the updated parameter that is of the initial model and that is fed back by each of the N candidate client MTLFs, and determines a first intermediate model. Based on the descriptions in step 405 to step 409, the server MTLF determines, in the N candidate client MTLFs, client MTLFs that participate in a second round of federated learning. In a process of the second round of federated learning, the server MTLF sends the first intermediate model to each of the determined client MTLFs that participate in the second round of federated learning. Each client MTLF performs model training on the first intermediate model based on locally collected data, and updates a parameter of the first intermediate model. The server MTLF determines a second intermediate model based on an updated parameter that is of the first intermediate model and that is fed back by each client MTLF. Based on the descriptions in step 405 to step 409, the server MTLF selects, in the client MTLFs that participate in the second round of federated learning, client MTLFs that participate in a third round of federated learning. In a process of the third round of federated learning, the server MTLF sends the second intermediate model to each of the client MTLFs that participate in the third round of federated learning, performs a cyclic operation, and does not terminate the federated learning until accuracy evaluation information of a model determined by the server MTLF meets target accuracy. In the plurality of rounds of screening processes, the server MTLF can remove, from a federated learning group, a client MTLF whose distribution of local data is different from distribution of the local data of the AnLF, so that a model obtained through the federated learning has higher accuracy when being used for network analytics.

Step 4011: In the federated learning process, after a plurality of rounds of federated learning and update, if accuracy evaluation information that is of a model and that is fed back by each client MTLF meets a level of the target accuracy, the server MTLF terminates performing a next round of federated learning. The server MTLF sends a model request response message to the AnLF. The model request response message carries a final model obtained through the federated learning.

Step 4012: When obtaining the final model, the AnLF performs analytics by using the final model, and sends an analytics subscription notification message or an analytics information response message to the analytics service requester AC. The message carries an analytics result.

For example, when receiving the final model, the AnLF may locally collect data based on the model filter information, input the collected local data into the final model, and use an output of the final model as the analytics result.

Through the foregoing method, the server MTLF may select, based on accuracy evaluation information that is of a model and that is fed back by the AnLF and accuracy evaluation information that is of the model and that is fed back by client MTLFs that participate in a last round of federated learning, client MTLFs that participate in a next round of federated learning, to avoid a case in which when the AnLF uses a model of the federated learning, inference accuracy of the AnLF cannot meet a requirement because a data feature of local data of the client MTLF is different from a data feature of local data of the AnLF.

This application further provides a data analytics method. The method includes: A server MTLF receives a model request message from an AnLF. The model request message includes at least one of the following: an analytics identifier, model filter information, or target accuracy that needs to be met by a model. The analytics identifier identifies an analytics task, the model filter information indicates a condition that needs to be met by training data in a federated learning process, and the target accuracy that needs to be met by the model indicates accuracy that needs to be met by the model that is used for inference of a current analytics task and that is trained in the federated learning process. The server MTLF determines, based on the model request message, to perform federated learning or not to perform the federated learning. Optionally, when determining not to perform the federated learning, the server MTLF sends a model request response message to the AnLF. The model request response message includes a federated learning failure cause and/or an analytics aggregation indication. The analytics aggregation indication indicates the AnLF to determine a result of the current analytics task in an analytics aggregation manner. When the server MTLF determines to perform the federated learning, when each round of federated learning terminates, the server MTLF may send a second model evaluation request message to a client MTLF that participates in this round of federated learning. The second model evaluation request message carries a model obtained in this round of training, and the second model evaluation request message is used to request the client MTLF to report accuracy evaluation information of the model obtained in this round of training. The server MTLF receives a second model evaluation request response message from the client MTLF. The second model evaluation request response message includes the accuracy evaluation information that is of the model obtained in this round of training and that is reported by the client MTLF. When the accuracy evaluation information that is of the model and that is fed back by the client MTLF meets target accuracy, the federated learning is terminated. Optionally, the target accuracy may be preset, pre-configured in or pre-notified to the server MTLF, or obtained by the server MTLF from a model request message sent by the AnLF, or the like. This is not limited.

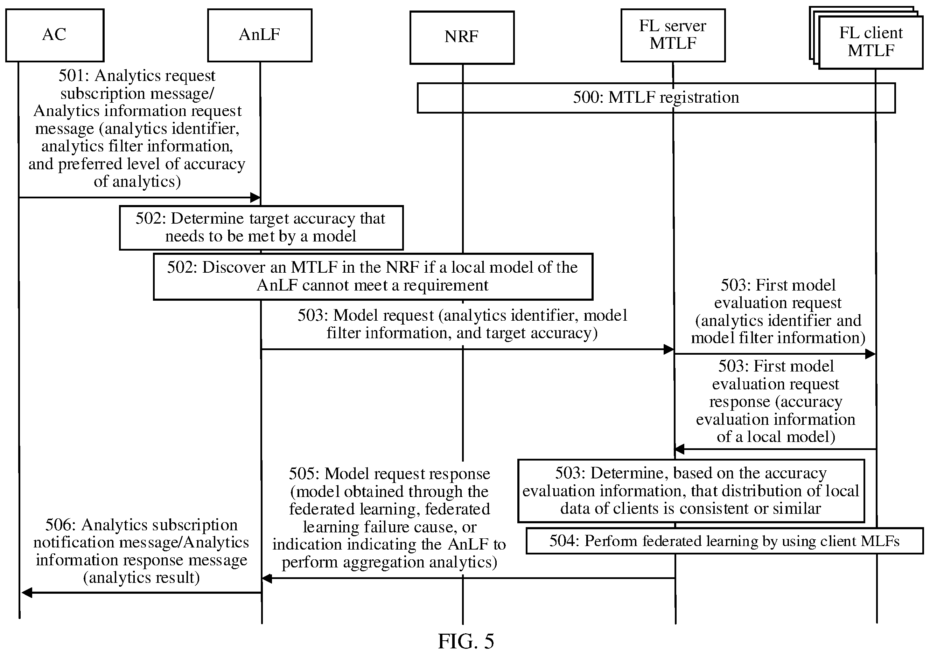

As shown in FIG. 5, a procedure of a data analytics method is provided and includes at least the following steps.

Step 500: Each MTLF registers information about the MTLF with an NRF.

Step 501: An analytics service consumer AC sends an analytics request subscription message or an analytics information request message to an AnLF. The analytics request subscription message or the analytics information request message carries at least one of the following: an analytics identifier, analytics filter information, or a preferred level of accuracy of analytics.

Step 502: The AnLF sends a model request message to a server MTLF. The model request message includes at least one of the following: an analytics identifier, model filter information, or target accuracy that needs to be achieved by a model. The model filter information is determined based on the analytics filter information, and the target accuracy that needs to be met by the model is determined based on the preferred level of accuracy of analytics.

Optionally, the AnLF may first determine whether a local model of the AnLF can meet requirements of the analytics identifier, the model filter information, and the target accuracy. If the local model does not meet the requirements, the AnLF query the NRF for an MTLF meets the requirements. If the MTLF that meets the requirements is not found in the NRF either, the AnLF queries the NRF for an MTLF that can provide a server role, and sends a model request message to the MTLF that can provide the server role. In other words, if a model that meets the analytics identifier and the model filter information and that meets the target accuracy can be found through matching, the AnLF determines not to perform the federated learning; or if a model that meets the analytics identifier and the model filter information and that meets the target accuracy cannot be found through matching, the AnLF determines to perform the federated learning, to train a model that meets the target accuracy and that is used for inference of a current task in the federated learning process.

Step 503: When receiving the model request message from the AnLF, the server MTLF may determine whether the federated learning needs to be performed. If the federated learning is performed, subsequent step 504 continues to be performed.

In a design, the server MTLF may determine, based on the analytics identifier and/or the model filter information carried in the model request message, whether to perform the federated learning. For example, the server MTLF may determine a feature of the training data in the federated learning process based on the analytics identifier and/or the model filter information. If the feature of the training data is unrelated to a geographic location, for example, if the training data is related to an application service, the server MTLF determines that the federated learning is suitable to be performed. Alternatively, if the feature of the training data is related to a geographic location, the server MTLF determines that the federated learning is not suitable to be performed.

When the analytics identifier and/or the model filter information is any one of the following, it may be determined that the federated learning is not suitable to be performed.
(1) The analytics identifier is data network performance analytics (DN performance analytics).
(2) The analytics identifier is redundant transmission experience related analytics (redundant transmission experience related analytics).
(3) The analytics identifier is session management congestion control experience (session management congestion control Experience).
(4) The analytics identifier is dispersion analytics (dispersion analytics), and the model filter information is a specified network slice identifier.
(5) The analytics identifier is observed service experience related network data analytics (observed service experience related network data analytics).
(6) The analytics identifier is slice load level related network data analytics (slice load level related network data analytics).

When the analytics identifier and/or the model filter information is any one of the following, it may be considered that network data of a training model is related to the geographic location. In this case, distribution of local data of the client MTLF is different, and it is determined that the federated learning is not suitable to be performed.
(1) The analytics identifier is WLAN performance analytics (performance analytics).
(2) The analytics identifier is dispersion analytics (dispersion analytics), and the model filter information includes a specified network location.
(3) The analytics identifier is quality of service sustainability analytics (QoS sustainability analytics).
(4) The analytics identifier is user data congestion analytics (user data congestion analytics).
(5) The analytics identifier is UE mobility analytics (UE mobility analytics).
(6) The analytics identifier is UE communication analytics (UE communication analytics).
(7) The analytics identifier is an expected UE behavioral parameter (expected UE behavioral parameters).
(8) The analytics identifier is abnormal behavior related network data analytics (abnormal behavior related network data analytics), and the model filter information is an unexpected UE location (unexpected UE location), unexpected long-live/large rate flows (unexpected long-live/large rate flows), unexpected radio link failures (unexpected radio link failures), or ping-ponging across neighboring cells (Ping-ponging across neighboring cells).
(9) The analytics identifier is network performance analytics (network performance analytics), and the model filter information is a network area of interest or a specific gNB.
(10) The analytics identifier is NF load analytics (NF load analytics), and the model filter information is a specified NF or an NF in a specific area.

In another design, the server MTLF may query the NRF for MTLFs registered as client roles. The MTLFs obtained through query may be referred to as client MTLFs, and the client MTLFs obtained through query may form a federated learning group. The server MTLF may send a first model evaluation request message to a client MTLF in the federated learning group. The first model evaluation request message is used to request the client MTLF to report accuracy evaluation information of a local model. Optionally, the first model evaluation request message may include an analytics identifier and model filter information. The client MTLF may determine a unique model locally on the client MTLF based on the analytics identifier and the model filter information that are carried in the first model evaluation request message. The client MTLF may verify accuracy evaluation information of the local model by using local training data as a validation set. Optionally, the client MTLF may use local training data that meets a condition of the model filter information as the validation set. For example, when the analytics identifier is quality of service preset, and the model filter information is a network slice of an internet of vehicles service, the client MTLF may determine the accuracy evaluation information of the local model by using a local training data set of the network slice of the internet of vehicles service as a validation set. The client MTLF may send a first model evaluation request response message to the server MTLF. The message carries the determined accuracy evaluation information of the local model. The accuracy evaluation information may be an evaluated value of accuracy, an evaluation level of accuracy, or the like. For details, refer to the foregoing descriptions. The server MTLF may determine, based on the accuracy evaluation information that is of the local model and that is fed back by each client MTLF, whether federated learning needs to be performed. If the accuracy evaluation information that is of the local model and that is fed back by each client MTLF meets the target accuracy in step 502, it is determined that the federated learning does not need to be performed. The server MTLF may send a model request response message to the AnLF. The model request response message carries a federated learning failure cause and/or an analytics aggregation indication. The analytics aggregation indication indicates the AnLF to perform analytics in an analytics aggregation manner. For example, the analytics aggregation indication indicates the AnLF to directly forward the analytics request subscription message or the analytics information request message in step 501 to an NWDAF of each client MTLF. Each NWDAF provides an inferred prediction result in a service area of the NWDAF. It should be noted that a specific inference process is specifically performed by an AnLF in each NWDAF. The AnLF aggregates the inferred prediction result of each NWDAF. For example, when an internet of vehicles server requests that each location on a path is quality of service prediction of network handover of an internet of vehicles service, the AnLF may aggregate and summarize an inference result of each NWDAF that can cover the path in a service area, to provide a final analytics result to the internet of vehicles server. The process of determining, based on the accuracy evaluation information that is of the local model and that is fed back by each client, whether to perform the federated learning may be considered as a process of determining, based on the accuracy evaluation information, whether distribution of local data of clients is consistent or similar. In the procedure of FIG. 5, the process of determining, based on the accuracy evaluation information that is of the local model and that is fed back by the client MTLF, whether to perform the federated learning is described in an emphasized manner.

Whether the federated learning needs to be performed is determined by using the first design or the second design. Alternatively, with reference to the first design and the second design, it may be determined whether the federated learning needs to be performed may be determined in combination with both the first design and the second design. For example, whether the federated learning needs to be performed may be first determined by using the first design. If it is determined that the federated learning is not performed, a model request response message is sent to the AnLF. The model request response message carries a federated learning failure cause, and the cause may be that the federated learning is not suitable to be performed because network data for training a current model is related to a geographic location. Alternatively, if it is determined that the federated learning is performed, whether the federated learning is performed may be determined by using the second design. If the federated learning is performed, subsequent steps in this application continue to be performed. If it is determined that the federated learning is not performed, a model request response message is sent to the AnLF. The model request response message carries an analytics aggregation indication or the like.

Step 504: The server MTLF performs the federated learning by using client MLFs.

There may be a plurality of rounds of federated learning processes. In each round of federated learning process, the server MTLF sends an initial model in this round to each of the client MTLFs. Each of the client MTLFs trains the initial model by using locally collected data, updates a parameter of the initial model, and sends an updated parameter of the initial model to the server MTLF. The server MTLF updates the initial model based on the update parameter that is of the initial model and that is fed back by each client, to determine a model in this round of training. The model in this round of training may be used as an initial model in a next round of model training. Optionally, when each round of model training terminates, the server MTLF may send a second model evaluation request message to each client MTLF. The second model evaluation request message carries a model in this round of training, and is used to request the client MTLF to report accuracy evaluation information of the model in this round of model training. When receiving the model in this round of training, the client MTLF verifies accuracy of the model based on locally collected data, and reports the accuracy evaluation information of the model in this round of training to the server MTLF. For example, the client MTLF may send a second model evaluation request response message to the server MTLF. The second model evaluation request response message carries the accuracy evaluation information of the model in this round of training. The accuracy evaluation information may be an evaluated value of accuracy of the model in this round of training, or an evaluation level of accuracy of the model in this round of training. This is not limited. When receiving the accuracy evaluation information that is of the model in this round of training and that is reported by each client, the server MTLF may determine whether the accuracy evaluation information that is of the model in this round and that is reported by each client meets the target accuracy in step 502. If the accuracy evaluation information meets the target accuracy, the federated learning is terminated. The AnLF sends a model request response message to the server MTLF. The model request response message carries a model obtained through the federated learning. Alternatively, if the accuracy evaluation information that is of the model in this round and that is reported by each client does not meet the target accuracy in step 502, a next round of model training is continued.

Step 505: The server MTLF sends a model request response message to the AnLF. The model request response message carries a model obtained through the federated learning, a federated learning failure cause, an indication indicating the AnLF to perform analytics aggregation, or the like.

Step 506: The AnLF performs network analytics, and sends an analytics subscription notification message or an analytics information response message to the analytics service consumer AC. The message carries an analytics result.

For example, if the model request response message in step 505 carries the model obtained through the federated learning, the AnLF may perform model inference by using the model obtained through the federated learning, and feed back an inference result as the analytics result to the AnLF. Alternatively, if the model request response message in step 505 carries the indication indicating the AnLF to perform analytics aggregation, the AnLF performs the aggregation analytics, and feeds back a result of the aggregation analytics as the analytics result to the AC. For a specific aggregation analytics process, refer to the foregoing descriptions.

Through the foregoing design, the server MTLF may determine, based on the local model or a model obtained in each round of federated learning, whether to perform subsequent federated learning. This can avoid unnecessary federated learning, save network resources, and meet an accuracy requirement of a model for an analytics service.

It may be understood that to implement functions in the foregoing embodiments, the server MTLF, the client MTLF, the AnLF, and the like include corresponding hardware structures and/or software modules for performing various functions. A person skilled in the art should be easily aware that, in this application, the units and method steps in the examples described with reference to embodiments disclosed in this application can be implemented by hardware or a combination of the hardware and computer software. Whether a function is performed by hardware or hardware driven by computer software depends on particular application scenarios and design constraints of the technical solutions.

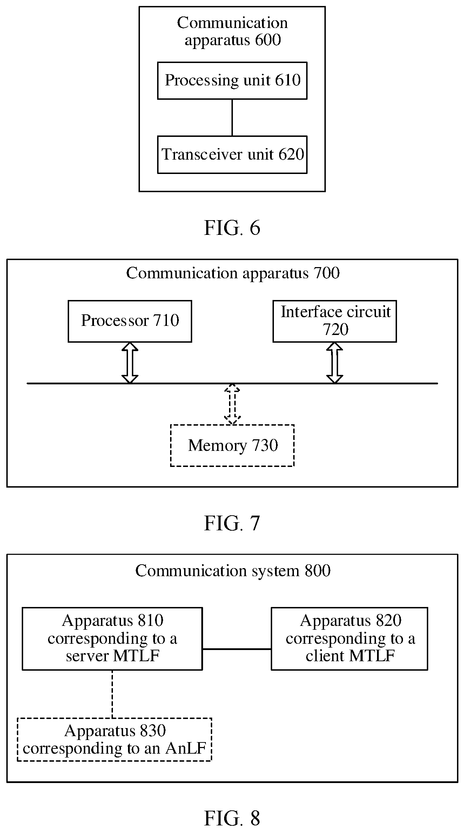

FIG. 6 and FIG. 7 are schematic diagrams of structures of possible communication apparatuses according to embodiments of this application. These communication apparatuses may be configured to implement the functions of the server MTLF, the client MTLF, or the AnLF in the foregoing method embodiments, and therefore may also implement beneficial effects of the foregoing method embodiments.

As shown in FIG. 6, the communication apparatus 600 includes a processing unit 610 and a transceiver unit 620. The communication apparatus 600 is configured to implement functions of the server MTLF, the client MTLF, or the AnLF in the method embodiment shown in FIG. 3, FIG. 4, or FIG. 5.

When the communication apparatus 600 is configured to implement the functions of the server MTLF in the method embodiment shown in FIG. 3 or FIG. 4, the transceiver unit 620 is configured to: send a first model to each of N candidate client model training logical functions MTLFs; and receive first accuracy evaluation information from each of the N candidate client MTLFs. The first accuracy evaluation information indicates accuracy that is of the first model and that is determined by the candidate client MTLF by using local data, and N is a positive integer greater than 1. The processing unit 610 is configured to determine, based on the N pieces of first accuracy evaluation information, client MTLFs that participate in federated learning in the N candidate client MTLFs.

When the communication apparatus 600 is configured to implement the functions of the client MTLF or the AnLF in the method embodiment shown in FIG. 3 or FIG. 4, the transceiver unit 620 is configured to receive a model evaluation request message from a server model training logical function MTLF. The model evaluation request message includes a first model. The processing unit 610 is configured to determine accuracy evaluation information of the first model by using local data. The accuracy evaluation information is first accuracy evaluation information and second accuracy evaluation information. The transceiver unit 620 is further configured to send a model evaluation request response message to the server MTLF. The model request response message includes the accuracy evaluation information of the first model.

When the communication apparatus 600 is configured to implement the functions of the server MTLF in the method embodiment shown in FIG. 5, the transceiver unit 620 is configured to receive a model request message from an analytics logical function AnLF. The model request message includes at least one of the following: an analytics identifier, model filter information, or target accuracy that needs to be met by a model. The analytics identifier identifies an analytics task, the model filter information indicates a condition that needs to be met by training data in a federated learning process, and the target accuracy that needs to be met by the model indicates accuracy that needs to be met by a model that infers a current analytics task. The processing unit 610 is configured to determine, based on the model request message, to perform federated learning or not to perform the federated learning.

When the communication apparatus 600 is configured to implement the functions of the AnLF in the method embodiment shown in FIG. 5, the transceiver unit 620 is configured to receive an analytics request message from a user. The analytics request message includes an analytics identifier and preferred accuracy of the analytics. The processing unit 610 is configured to: determine that a local model of the analytics logical function AnLF cannot meet a requirement of the analytics request message, and that a model training logical function MTLF that meets the requirement of the analytics request message cannot be found in a network repository function NRF. The transceiver unit 620 is further configured to send a model request message to the server MTLF. The model request message includes at least one of the following: an analytics identifier, model filter information, or target accuracy that needs to be met by a model. The target accuracy that needs to be met by the model is determined based on the preferred analytics accuracy of the analytics, and the model filter information indicates a condition that needs to be met by training data in a model training process.

For more detailed descriptions of the processing unit 610 and the transceiver unit 620, directly refer to the related descriptions in the method embodiment shown in FIG. 3, FIG. 4, or FIG. 5. Details are not described herein.

As shown in FIG. 7, the communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, input data required by the processor 710 to run the instructions, or data generated after the processor 710 runs the instructions.

When the communication apparatus 700 is configured to implement the method shown in FIG. 3, FIG. 4, or FIG. 5, the processor 710 is configured to implement the functions of the processing unit 610, and the interface circuit 720 is configured to implement the functions of the transceiver unit 620.

When the communication apparatus is a module used in the server MTLF, the module of the server MTLF implements the functions of the server MTLF in the foregoing method embodiment. The module of the server MTLF receives information from another module (for example, a radio frequency module or an antenna) in the server MTLF. The information is sent by the client MTLF or the AnLF to the server MTLF. Alternatively, the module of the server MTLF sends information to another module (for example, a radio frequency module or an antenna) in the server MTLF. The information is sent by the server MTLF to the client MTLF or the AnLF.

When the communication apparatus is a module used in the client MTLF, the module of the client MTLF implements the functions of the client MTLF in the foregoing method embodiment. The module of the client MTLF receives information from another module (for example, a radio frequency module or an antenna) in the client MTLF. The information is sent by the server MTLF to the client MTLF. Alternatively, the module of the client MTLF sends information to another module (for example, a radio frequency module or an antenna) in the client MTLF. The information is sent by the client MTLF to the server MTLF.

When the communication apparatus is a module used in the AnLF, the module of the AnLF implements the functions of the AnLF in the foregoing method embodiment. The module of the AnLF receives information from another module (for example, a radio frequency module or an antenna) in the AnLF. The information is sent by the server MTLF to the AnLF. Alternatively, the module of the AnLF sends information to another module (for example, a radio frequency module or an antenna) in the AnLF. The information is sent by the AnLF to the server MTLF.

As shown in FIG. 8, this application further provides a communication system 800. The system includes an apparatus 810 corresponding to the server MTLF and an apparatus 820 corresponding to the client MTLF. Optionally, the communication system further includes an apparatus 830 corresponding to the AnLF.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in the ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: the volatile storage medium and the non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A data analytics method, comprising:
sending a first model to each of N candidate client model training logical functions MTLFs;
receiving first accuracy evaluation information from each of the N candidate client MTLFs, wherein the first accuracy evaluation information indicates accuracy that is of the first model and that is determined by the candidate client MTLF by using local data, and N is a positive integer greater than 1; and
determining, based on the N pieces of first accuracy evaluation information, client MTLFs that participate in federated learning in the N candidate client MTLFs.

2. The method according to claim 1, wherein the sending a first model to each of N candidate client MTLFs comprises: sending a first model evaluation request message to each of the N candidate client MTLFs, wherein the first model evaluation request message comprises the first model.

3. The method according to claim 1 or 2, wherein the receiving first accuracy evaluation information from each of the N candidate client MTLFs comprises: receiving a first model evaluation request response message from each of the N candidate client MTLFs, wherein the first model evaluation request response message comprises the first accuracy evaluation information.

4. The method according to any one of claims 1 to 3, wherein the first accuracy evaluation information is an evaluated value that is of the accuracy of the first model and that is fed back by the candidate client MTLF, and a difference between evaluated values fed back by any two candidate client MTLFs in the client MTLFs that participate in the federated learning is less than or equal to a first threshold.

5. The method according to claim 4, wherein the determining, based on the N pieces of first accuracy evaluation information, client MTLFs that participate in federated learning in the N candidate client MTLFs comprises:
determining a largest evaluated value and a smallest evaluated value in the N evaluated values; and
participating, by all the N candidate clients, in the federated learning if a difference between the largest evaluated value and the smallest evaluated value is less than or equal to the first threshold; or
determining a mean of the N evaluated values if a difference between the largest evaluated value and the smallest evaluated value is greater than the first threshold; determining an absolute value of a difference between each of the N evaluated values and the mean; removing, from a federated learning group comprising the N candidate clients, a candidate client MTLF corresponding to an evaluated value whose absolute value of a difference from the mean is largest, to form a new federated learning group; and continuing to determine a largest evaluated value and a smallest evaluated value in the new federated learning group, and determine a value relationship between a difference between the two evaluated values and the first threshold.

6. The method according to any one of claims 1 to 3, wherein the first accuracy evaluation information is an evaluation level that is of the accuracy of the first model and that is fed back by the candidate client MTLF, and evaluation levels fed back by the client MTLFs that participate in the federated learning meet a target evaluation level.

7. The method according to claim 6, wherein the determining, based on the N pieces of first accuracy evaluation information, client MTLFs that participate in federated learning in the N candidate client MTLFs comprises:
determining, in the N evaluation levels, an evaluation level whose difference from the target evaluation level is less than or equal to a third threshold; and
using a candidate client MTLF corresponding to the evaluation level whose difference from the target evaluation level is less than or equal to the third threshold as a client MTLF that participates in the federated learning.

8. The method according to any one of claims 1 to 3, further comprising:
sending the first model to an analytics logical function AnLF; and
receiving second accuracy evaluation information from the AnLF, wherein the second accuracy evaluation information indicates accuracy that is of the first model and that is determined by the AnLF by using local data.

9. The method according to claim 8, wherein the sending the first model to an AnLF comprises: sending a second model evaluation request message to the AnLF, wherein the second model evaluation request message comprises the first model.

10. The method according to claim 8 or 9, wherein the receiving second accuracy evaluation information from the AnLF comprises: receiving a second model evaluation request response message from the AnLF, wherein the second model evaluation request response message comprises the second accuracy evaluation information.

11. The method according to any one of claims 8 to 10, wherein the determining, based on the N pieces of first accuracy evaluation information, client MTLFs that participate in federated learning in the N candidate client MTLFs comprises:
determining, based on the N pieces of first accuracy evaluation information and the second accuracy evaluation information, the client MTLFs that are in the N candidate clients and that participate in the federated learning.

12. The method according to any one of claims 8 to 11, wherein the second accuracy evaluation information is a reference value that is of the accuracy of the first model and that is fed back by the AnLF, the first accuracy evaluation information is an evaluated value that is of the accuracy of the first model and that is fed back by the candidate client MTLF, and a difference between an evaluated value fed back by any one of the client MTLFs that participate in the federated learning and the reference value is less than or equal to a fourth threshold.

13. The method according to claim 12, wherein the determining, based on the N pieces of first accuracy evaluation information and the second accuracy evaluation information, the client MTLFs that are in the N candidate client MTLFs and that participate in the federated learning comprises:
determining, in N evaluated values, an evaluated value whose difference from the reference value is less than or equal to the fourth threshold; and
using a candidate client MTLF corresponding to the evaluated value whose difference from the reference value is less than or equal to the fourth threshold as a client MTLF that participates in the federated learning.

14. The method according to any one of claims 8 to 11, wherein the second accuracy evaluation information is a reference level that is of the accuracy of the first model and that is fed back by the AnLF, the first accuracy evaluation information is an evaluation level that is of the accuracy of the first model and that is fed back by the candidate client MTLF, and a difference between an evaluation level fed back by the client MTLF that participates in the federated learning and the reference level is less than or equal to a fifth threshold.

15. The method according to claim 11 or 14, wherein the determining, based on the N pieces of first accuracy evaluation information and the second accuracy evaluation information, the client MTLFs that are in the N candidate client MTLFs and that participate in the federated learning comprises:
determining, in N evaluation levels, an evaluation level whose difference from the reference level is less than or equal to the fifth threshold; and
using a candidate client MTLF corresponding to the evaluation level whose difference from the reference level is less than or equal to the fifth threshold as a client MTLF that participates in the federated learning.

16. The method according to claim 4, 5, 12, or 13, wherein the evaluated value or the reference value comprises at least one of the following: a correct rate, an error rate, a precision rate, a recall rate, a mean absolute error, a mean absolute percentage error, or a mean square error.

17. The method according to any one of claims 1 to 16, wherein the first model is an initial model, an intermediate model, or a final model in a federated learning process.

18. The method according to any one of claims 1 to 17, wherein further comprising:
receiving a model request message from the AnLF, wherein the model request message comprises at least target accuracy that needs to be met by a model; and
terminating the federated learning when third accuracy evaluation information that is of the first model and that is fed back by the client MTLF that participates in the federated learning meets a requirement of the target accuracy; or
when third accuracy evaluation information that is of the first model and that is fed back by the client MTLF that participates in the federated learning does not meet a requirement of the target accuracy, determining a second model based on a model parameter fed back by the client MTLF that participates in the federated learning.

19. A data analytics method, comprising:
receiving a first model from a server model training logical function MTLF;
determining accuracy evaluation information of the first model by using local data; and
sending the accuracy evaluation information of the first model to the server MTLF.

20. The method according to claim 19, wherein the accuracy evaluation information is first accuracy evaluation information, and the first accuracy evaluation information indicates accuracy that is of the first model and that is determined by a candidate client MTLF by using local data.

21. The method according to claim 19, wherein the accuracy evaluation information is second accuracy evaluation information, and the second accuracy evaluation information indicates accuracy that is of the first model and that is determined by an analytics logical function AnLF by using local data.

22. The method according to any one of claims 19 to 21, wherein the receiving a first model from a server model training logical function MTLF comprises: receiving a model evaluation request message from the server model training logical function MTLF, wherein the model evaluation request message comprises the first model; and
the sending the accuracy evaluation information of the first model to the server MTLF comprises: sending a model evaluation request response message to the server MTLF, wherein the model request response message comprises the accuracy evaluation information of the first model.

23. The method according to any one of claims 19 to 22, wherein the accuracy evaluation information of the first model is an evaluated value of the accuracy of the first model, and the determining accuracy evaluation information of the first model by using local data comprises:
determining an output of the first model based on the local data and the first model; and
determining the evaluated value of the accuracy of the first model based on the output of the first model.

24. The method according to any one of claims 19 to 22, wherein the accuracy evaluation information of the first model is an evaluation level of the accuracy of the first model, and the determining accuracy evaluation information of the first model by using local data comprises:
determining an output of the first model based on the local data and the first model;
determining an evaluated value of the accuracy of the first model based on the output of the first model; and
determining the evaluation level of the accuracy of the first model based on the evaluated value of the accuracy of the first model.

25. The method according to any one of claims 19 to 24, further comprising:
sending a model request message to the server MTLF, wherein the model request message comprises at least target accuracy that needs to be met by a model.

26. The method according to claim 25, wherein before the sending a model request message to the server MTLF, further comprising:
receiving an analytics request message from a user, wherein the analytics request message comprises at least one of the following: an analytics identifier, analytics filter information, or target accuracy that needs to be met by the analytics; and
determining that a local model of the analytics logical function AnLF cannot meet a requirement of the analytics request message, and that an MTLF that meets the requirement of the analytics request message cannot be found in a network repository function NRF.

27. The method according to any one of claims 23 to 26, wherein the evaluated value comprises at least one of the following: a correct rate, an error rate, a precision rate, a recall rate, a mean absolute error, a mean absolute percentage error, or a mean square error.

28. The method according to any one of claims 19 to 27, wherein the first model is an initial model, an intermediate model, or a final model in a federated learning process.

29. A data analytics method, comprising:
receiving a model request message from an analytics logical function AnLF, wherein the model request message comprises at least one of the following: an analytics identifier, model filter information, or target accuracy that needs to be met by a model, wherein the analytics identifier identifies an analytics task, the model filter information indicates a condition that needs to be met by training data in a federated learning process, and the target accuracy that needs to be met by the model indicates accuracy that needs to be met by a model that infers a current analytics task; and
determining, based on the model request message, to perform federated learning or not to perform the federated learning.

30. The method according to claim 29, wherein the determining, based on the model request message, to perform federated learning or not to perform the federated learning comprises:
determining a feature of the training data in the federated learning process based on the analytics identifier and/or the model filter information; and
determining to perform the federated learning if the feature of the training data is unrelated to a geographic location; or
determining not to perform the federated learning if the feature of the training data is related to a geographic location.

31. The method according to claim 29, wherein the determining, based on the model request message, to perform federated learning or not to perform the federated learning comprises:
sending a first model evaluation request message to a client MTLF that participates in the federated learning, wherein the first model evaluation request message is used to request the client MTLF to report accuracy evaluation information of a local model;
receiving a first model evaluation request response message from the client MTLF, wherein the first model evaluation request response message comprises the accuracy evaluation message that is of the local model and that is reported by the client MTLF; and
determining not to perform the federated learning if the accuracy evaluation information that is of the local model and that is fed back by the client MTLF meets the target accuracy; or
determining to perform the federated learning if the accuracy evaluation information that is of the local model and that is fed back by the client MTLF does not meet the target accuracy.

32. The method according to any one of claims 29 to 31, wherein when the determining not to perform the federated learning, the method further comprises:
sending a model request response message to the AnLF, wherein the model request response message comprises a federated learning failure cause or an analytics aggregation indication, and the analytics aggregation indication indicates the AnLF to determine a result of the current analytics task in an analytics aggregation manner.

33. The method according to any one of claims 29 to 31, wherein when the determining to perform federated learning, the method further comprises:
sending a second model evaluation request message to the client MTLF that participates in the federated learning, wherein the second model evaluation request message comprises a model obtained in this round of model training, and the second model evaluation request message is used to request the client MTLF to report accuracy evaluation information of the model obtained in this round of training;
receiving a second model evaluation request response message from the client MTLF, wherein the second model evaluation request response message comprises the accuracy evaluation information that is of the model obtained in this round of model training and that is reported by the client MTLF; and
terminating the federated learning if the accuracy evaluation information that is of the model obtained in this round of model training and that is reported by the client MTLF meets the target accuracy.

34. A data analytics method, comprising:
receiving an analytics request message from a user, wherein the analytics request message comprises an analytics identifier and preferred accuracy of the analytics; and
sending a model request message to a server MTLF when a local model of an analytics logical function AnLF cannot meet a requirement of the analytics request message and a model training logical function MTLF that meets the requirement of the analytics request message cannot be found in a network repository function NRF, wherein the model request message comprises at least one of the following: the analytics identifier, model filter information, or target accuracy that needs to be met by a model, the target accuracy that needs to be met by the model is determined based on the preferred analytics accuracy of the analytics, and the model filter information indicates a condition that needs to be met by training data in a model training process.

35. The method according to claim 34, further comprising:
receiving a model request response message from the server MTLF, wherein the model request response message comprises a federated learning failure cause or an analytics aggregation indication, and the analytics aggregation indication indicates the AnLF to determine a result of a current analytics task in an analytics aggregation manner.

36. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 18 or the method according to any one of claims 29 to 33 by using a logic circuit or by executing code instructions.

37. A communication apparatus, comprising a unit configured to perform the method according to any one of claims 1 to 18 or a unit configured to perform the method according to any one of claims 29 to 33.

38. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 19 to 28 or the method according to claim 34 or 35 by using a logic circuit or by executing code instructions.

39. A communication apparatus, comprising a unit configured to perform the method according to any one of claims 19 to 28 or a unit configured to perform the method according to claim 34 or 35.

40. A communication system, comprising the communication apparatus according to claim 36 and the communication apparatus according to claim 38, or comprising the communication apparatus according to claim 37 and the communication apparatus according to claim 39.

41. A computer-readable storage medium, wherein the storage medium stores a computer program or instructions, and when the computer program or the instructions are executed by a communication apparatus, the method according to any one of claims 1 to 18 is implemented, the method according to any one of claims 19 to 28 is implemented, the method according to any one of claims 29 to 33 is implemented, or the method according to claim 34 or 35 is implemented.
